# EUROPÄISCHE PATENTSCHRIFT

(11) **EP 0 860 643 B1**
(45) Veröffentlichungstag und Bekanntmachung des Hinweises auf die Patenterteilung: **01.10.2003**
(21) Anmeldenummer: 98101592.8
(22) Anmeldetag: 30.01.1998
(51) Int. Cl.: F16L 37/088

(54) **Druckmittel-Steckkupplung**
Plug-in pressurized coupling
Raccord enfichable sous pression

(30) Priorität: 25.02.1997 DE 19707371
(43) Veröffentlichungstag der Anmeldung: 26.08.1998
(73) Patentinhaber: Voss Fluid GmbH + Co. KG, 51688 Wipperfürth (DE)
(72) Erfinder: Hester, Hilmar, 51 688 Wipperfürth (DE); Schröer, Bettina, 51 688 Wipperfürth (DE)
(74) Vertreter: Patentanwälte Dr. Solf & Zapf

(56) Entgegenhaltungen:
- EP-A- 0 748 975
- WO-A-88/09459
- GB-A- 1 084 400
- US-A- 3 447 819

## Beschreibung

Die vorliegende Erfindung betrifft eine Steckkupplung für Druckmittelsysteme, bestehend aus zwei Kupplungsteilen, und zwar einem Gehäuseteil und einem Steckerteil, wobei das Steckerteil abgedichtet in eine Aufnahmeöffnung des Gehäuseteils einsteckbar und in einer eingesteckten Montagestellung mittels einer Verriegelungseinrichtung gegen Lösen arretierbar ist, und wobei die Verriegelungseinrichtung ein Halteelement aufweist, das im Gehäuseteil gelagert ist und in der Montagestellung in eine Haltenut des Steckerteils form- oder kraftformschlüssig eingreift, wobei eine Löseeinrichtung derart vorgesehen ist, dass ausgehend von der Montagestellung durch weitergehendes Einstecken des Steckerteils das Halteelement in eine die Haltenut freigebende Lösestellung gebracht und so in dieser Lösestellung gehalten wird, dass das Steckerteil nachfolgend aus der Aufnahmeöffnung entehmbar ist, wobei die Löseeinrichtung einen hülsenförmigen, auf dem die Haltenut Steckerteil relativverschiebbar angeordneten, durch Bewegen des Steckerteils betätigbaren Verschlußschieber für die Haltenut derart aufweist, dass das Halteelement in der Lösestellung zur radialen Auflage auf einer Umfangsfläche des Verschlußschiebers gelangt und dadurch in der Lösestellung gehalten wird und bei der Stecker-Entnahmebewegung der Verschlußschieber axial so in den Bereich der Haltenut in eine Verschlußstellung bewegt wird, dass die Haltenut vollständig von dem Verschlußschieber überdeckt und für das Halteelement geschlossen ist, so dass ein radiales Eingreifen des Halteelementes in die Haltenut ausgeschlossen ist.

Eine Steckkupplung der gattungsgemäßen Art ist in der US 3,447,819 A beschrieben (Figuren 1 bis 3). Das Löseelement weist einen Durchmesser auf, der dem Durchmesser des Steckerteils entspricht, so dass sich in einer vorderen Stellung des Löseelementes eine durchgehende, zylindrische Fläche ergibt. Zum Lösen des Steckerteils wird dieses "übersteckt", d. h. aus der eigentlichen Montagestellung weitergehend in das Gehäuseteil eingesteckt. Hierbei muss vor dem Einstecken das Löseelement manuell in seine hintere, die Haltenut freigebende Stellung bewegt werden, damit das Halteelement sicher einrasten kann.

Eine andere Art von Kupplung ist aus der WO-A-96/35906 bzw. der parallelen SE-C-503 937 bekannt. Dabei weist die Verriegelungseinrichtung als Halteelement mehrere einzelne Riegelteile auf, die über den Umfang verteilt derart in einer inneren Ringnut des Gehäuse- bzw. Muffenteils (female connector) sitzen, dass sie jeweils schräg in Einsteckrichtung und radial nach innen geneigt sind und so gemeinsam eine praktisch konische Form bilden. Im Bereich der radial inneren Enden sind die Riegelteile von einem elastischen Ring (O-Ring) umschlossen, der dafür sorgt, dass die Riegelteile nur mit ihren radial inneren "Riegelenden" in eine Ringnut des Steckerteils eingreifen, um den Stecker gegen Lösen zu arretieren. Um dabei nachfolgend ein Lösen zu ermöglichen, ist innerhalb der Ringnut des Steckerteils ein Ring angeordnet, der eine radial gemessene Dicke aufweist, die der Tiefe der Ringnut entspricht. In axialer Richtung gesehen weist dieser Ring eine geringere Länge als die Nutweite auf, so dass er innerhalb der Haltenut verschiebbar angeordnet ist. Aufgrund dieses Ringes ist es möglich, durch eine weitergehende Einsteckbewegung des Steckers die Riegelteile nach außen zu spreizen; sie gelangen dann mit ihren Riegelenden zur Auflage auf dem Ring. Anschließend ist daher ein Lösen des Steckers möglich, weil beim Herausziehen die Riegelteile durch den Ring gespreizt gehalten werden. Diese bekannte Kupplung ist konstruktiv und herstellungs- bzw. montagemäßig relativ kompliziert und aufwendig, weil sie aus recht vielen Einzelteilen besteht. Vor allem die einzelnen Riegelteile iV.m. dem elastischen O-Ring erfordern für ihre Montage ein spezielles Verfahren sowie auch eine spezielle Montagevorrichtung (feeding head), mittels der die einzelnen Riegelteile eingesetzt und so lange fixiert werden, bis sie sich praktisch selbst gegenseitig fixieren.

Weitere Arten von Steckkupplungen sind hinlänglich aus zahlreichen Veröffentlichungen bekannt; lediglich beispielsweise seien hier die GB-A-799 155 und die EP-B-0 005 865 genannt. In der erstgenannten Veröffentlichung ist eine Kupplung beschrieben, bei der als Halteelement ein elastischer Haltering in einer Außenringnut am Steckerteil vormontiert ist. Der Haltering rastet dann in der eingesteckten Montagestellung in eine Innenringnut im Gehäuseteil ein. Hierbei ist ein nachfolgendes Lösen der Steckverbindung nicht mehr möglich, weil der Haltering von außen nicht zugänglich ist und daher nicht entriegelt werden kann. Die zweitgenannte Veröffentlichung beschreibt mehrere Ausführungsformen von Steckkupplungen, bei denen ein elastischer Haltering innerhalb des Gehäuseteils in einer Ringkammer gelagert ist und nach Einstecken in eine Außenringnut des Steckers einrastet, und zwar mit seiner gesamten in axialer Steckrichtung gemessenen Dicke, so dass ein echter Formschluß erreicht wird. Da hierbei die den Haltering aufnehmende Ringkammer zwischen einem Gehäuseteil und einem damit lösbar verbundenen Einschraubstück gebildet ist, ist bei dieser bekannten Kupplung ein Lösen möglich, indem das Einschraubstück demontiert und dann der Stecker zusammen mit dem in die Ringnut eingerasteten Haltering entnommen wird.

Bei der zuletzt beschriebenen Art von Kupplungen ist das einteilige, radialelastische Halteelement natürlich einfacher und schneller zu montieren als die Vielzahl von Riegelteilen gemäß der Druckschrift WO-A-96/35906, gemäß der allerdings das Lösen des Steckerteils einfacher und komfortabler ist.

Eine weitere Steckkupplung ist aus der WO 88/09459 bekannt. Bei dieser ist - ähnlich zu der WO 96/35906 - innerhalb einer Stecker-Haltenut ein ringförmiges Löseelement verschiebbar angeordnet. Dieses wirkt von innen her gegen ein Halteelement bzw. dessen federnde Haltearme, um diese zum Lösen radial nach aussen zu drängen.

Der vorliegenden Erfindung liegt die Aufgabe zu Grunde, eine Steckkupplung zu schaffen, bei der mit konstruktiv und herstellungs- bzw. montagemäßig besonders einfachen und preiswerten Mitteln ein Lösen des Steckerteils auf eine bezüglich der Handhabung einfache und schnelle Weise möglich sowie andererseits auch unter allen Bedingungen ein Stecken mit sicherer Arretierung in der Montagestellung gewährleistet ist.

Erfindungsgemäß wird dies dadurch erreicht, dass der hülsenförmige Verschlußschieber auf seiner dem freien, einzusteckenden Ende des Steckerteils zugekehrten Seite die Umfangsfläche des Steckerteils derart mit einem radialen Überstand überragt, dass beim Einstecken des Steckerteils der Verschlußschieber durch Anlagekontakt an dem Halteelement selbsttätig axial in eine die Haltenut freigebende und dadurch das Einrasten des Halteelementes ermöglichende Öffnungsstellung gebracht wird.

Somit kann die Haltenut erfindungsgemäß durch eine axiale Verschiebebewegung des Verschlußschiebers vollständig verschlossen oder ganz, d.h. über ihre gesamte axiale Nutweite, geöffnet werden. Daher kann vorteilhafterweise ein insbesondere einteiliges, radialelastisches Halteelement verwendet werden, welches in der Montagestellung praktisch mit seiner gesamten, in axialer Richtung gemessenen Länge bzw. Dicke in die Haltenut einrastet, wobei die axiale Dicke des Halteelements etwa gleich bzw. geringfügig kleiner als die axiale Länge bzw. Weite der Haltenut ist.

Zum Lösen des Steckerteils kann der Verschlußschieber der Löseeinrichtung weiterhin auf sehr komfortable Weise allein durch Bewegung des Steckerteils betätigt werden, was im Vergleich zu einer Demontage eines Einschraubstückes natürlich sehr viel einfacher und schneller zu bewerkstelligen ist, zumal keinerlei Werkzeug mehr erforderlich ist. Die Löseeinrichtung sorgt somit zunächst für ein Entriegeln des Halteelementes, und nachfolgend ist bei der Lösebewegung ein erneutes Einrasten des Halteelements in die Haltenut ausgeschlossen.

Durch die erfindungsgemäße Ausgestaltung, d. h. den radialen Überstand, wird auch bei einer Ausführung des Verschlußschiebers, der ohne einen äusseren Betätigungsabschnitt allein durch Relativbewegungen der Kupplungsteile bewegt (gesteuert) wird, sichergestellt, dass er beim Einstecken des Steckerteils durch Anlagekontakt am Halteelement selbsttätig in seine das Einrasten ermöglichende Öffnungsstellung gebracht wird, und zwar unter allen denkbaren Bedingungen.

In einer bevorzugten Ausführungsform der Erfindung ist zunächst zum Entriegeln des Halteelementes vorgesehen, dass die Haltenut derart einseitig von einer Schrägfläche (Konusfläche) begrenzt ist, dass durch das weitergehende Einstecken des Steckerteils das Halteelement über die Schrägfläche elastisch verformt und so in die Lösestellung gebracht wird. Um dann zu vermeiden, dass bei der anschließenden Lösebewegung des Steckerteils (bei der ja das Halteelement die Haltenut wieder passieren muß) das Halteelement wieder in die Haltenut einrastet, gelangt das Halteelement zur Auflage auf den relatiwerschiebbar geführten Verschlußschieber, so dass das Halteelement in der Lösestellung gehalten wird. Bei der Stecker-Entnahmebewegung wird dann über das in zumindest kraftschlüssigem, vorzugsweise aber kraftformschlüssigem Kontakt mit dem Verschlußschieber stehende Halteelement der Verschlußschieber relativ zur Haltenut so verschoben, dass die Haltenut gegen ein Einrasten des Halteelementes überdeckt bzw. verschlossen wird. Das Steckerteil kann dadurch ungehindert entnommen werden.

Wenn dann nachfolgend das Steckerteil wieder eingesteckt werden soll, wird dabei die Haltenut automatisch wieder geöffnet, indem eine relative Rückverschiebung des Verschlußschiebers vom Bereich der Haltenut erfolgt. Konstruktiv wird dies durch einen radialen Überstand des Verschlußschiebers erreicht, wodurch das Halteelement beim Einstecken in axialen, stimseitigen Anlagekontakt mit dem Verschlußschieber gelangt und diesen dadurch relativ zur Haltenut wegschiebt. Der Verschlußschieber ist somit praktisch "steckerbetätigbar".

Grundsätzlich kann es sich erübrigen, das Gehäuseteil zweiteilig auszubilden, denn zum Lösen brauchen keine Gehäuseteile demontiert zu werden. Allerdings kann für eine einfache Montage der funktionswesentlichen Einzelteile das Gehäuseteil weiterhin zweiteilig ausgeführt sein, es besteht dann zweckmäßigerweise aus einem Basisteil und einem damit lösbar verbundenen Verschlußteil. Die Ausgestaltung des Verschlußteils ist jedoch völlig beliebig. Beispielsweise kann es sich um eine Überwurfschraube (entsprechend der eingangs erwähnten EP-B-0 005 865) handeln. Es kann auch ein ebenfalls im wesentlichen hohlzylindrisches Einsatzteil vorgesehen sein, welches alternativ zu einer Schraubverbindung über andere Verbindungsmittel mit dem Basisteil verbunden ist, beispielsweise eine Bajonettverbindung und/oder eine Rastverbindung. Darüber hinaus ist auch ein deckelartiges Verschlußteil beispielsweise in Form einer ebenen Verschlußplatte möglich (vgl. z.B. DE 39 25 293 C2). In allen Fällen kommt es nur darauf an, eine Aufnahmekammer bzw. die Haltenut für das Halteelement axial zu begrenzen, so daß eine einfache Montage und Demontage der Einzelteile möglich ist. Dabei kann beispielsweise auch eine Verschlußplatte derart beweglich mit dem Basisteil verbunden sein, daß in einer ersten Stellung durch eine hinreichend große Öffnung hindurch die Einzelteile montiert bzw. demontiert werden können und in einer zweiten Stellung die Öffnung dann entsprechend derart verkleinert ist, daß nur noch das Steckerteil gesteckt bzw. entnommen werden kann. Eine solche Ausführung ist an sich beispielsweise aus der DE 38 10 385 A1 bekannt.

Im Zusammenhang mit der Erfindung, d.h. in Kombination mit der erfindungsgemäßen Löseeinrichtung, ist es von besonderem Vorteil, wenn das Halteelement derart aus mindestens zwei in Steckrichtung gesehen hintereinanderliegenden Einzelelementen besteht, daß beim Einsteck- bzw. Lösevorgang die Einzelelemente jeweils sukzessive radial verformt werden bzw. sukzessive nacheinander in die Haltenut einrasten. Vorzugsweise sind die Einzelelemente lamellenförmig als radialelastisch verformbare Klammern oder Federringe ausgebildet, wobei vorzugsweise zwei bis sechs, insbesondere fünf, gleichartig lamellenförmige Einzelelemente paketartig aneinanderliegen. Durch diese vorteilhafte Ausgestaltung wird erreicht, daß zur Betätigung des Halteelementes, d.h. zu dessen radialelastischer Verformung, jeweils nur eine relativ geringe Steckkraft erforderlich ist, während in der Montagestellung eine sehr hohe Haltekraft zur Aufnahme der inneren Systemdrücke gewährleistet ist. Einzelheiten dieser bevorzugten Ausgestaltung sind auch in einer gesonderten, prioritätsgleichen EP-Anmeldung auf der Basis der deutschen Patentanmeldung mit dem Aktenzeichen DE 197 07 372 enthalten; auf diese Anmeldung wird in vollem Umfang Bezug genommen.

Weitere vorteilhafte Ausgestaltungsmerkmale der Erfindung sind in den Unteransprüchen sowie der folgenden Beschreibung enthalten.

Anhand von in der Zeichnung veranschaulichten, bevorzugten Ausführungsbeispielen und Ausgestaltungen soll die Erfindung nun näher erläutert werden. Dabei zeigen:
- Fig. 1: einen Längsschnitt durch eine erfindungsgemäße Steckkupplung, wobei in der oberen Zeichnungshälfte der Vorgang beim Einstecken des Steckerteils mit gerade vollständig eingerastetem Halteelement dargestellt ist, während die untere Zeichnungshälfte die Montagestellung nach Beauschlagung mit innerem Systemdruck zeigt,
- Fig. 2: einen Längsschnitt analog zu Fig. 1 zur Veranschaülichung des Lösevorgangs, wobei in der oberen Zeichnungshälfte der Zustand nach Entriegeln des Halteelementes durch weitergehendes Einstekken des Steckerteils und in der unteren Zeichnungshälfte die ungehinderte Entnahmebewegung des Steckerteils veranschaulicht sind,
- Fig. 3: eine schematische Teilschnittdarstellung im Bereich der Löseeinrichtung mit einem herkömmlichen, einteiligen Block-Halteelement,
- Fig. 4: ein zugehöriges Steckkraft-Diagramm zur Ausführung nach Fig. 3,
- Fig. 5: eine Darstellung analog zu Fig. 3, jedoch mit einem neuartigen mehrteiligen Haltelement,
- Fig. 6: ein Steckkraft-Diagramm für den Löse- bzw. Entriegelvorgang der Ausführung nach Fig. 5,
- Fig. 7: ein entsprechendes Steckkraft-Diagramm für den Einsteckvorgang der Ausführung nach Fig. 5,
- Fig. 8 und 9: zwei schematische Darstellungen analog zu Fig. 3 bzw. 5 zur Erläuterung von Ausführungsvarianten der erfindungsgemäßen Löseeinrichtung,
- Fig. 10: eine gesonderte Schnittdarstellung eines Einzelteil-Beispiels der erfindungsgemäßen Steckkupplung nach Fig. 1 und 2 mit Darstellung des Halteelements,
- Fig. 11: einen Querschnitt in der Ebene XI-XI gemäß Fig. 10,
- Fig. 12: eine Ansicht in Pfeilrichtung XII gemäß Fig. 10 bzw. 11, jedoch ohne Darstellung des Halteelements,
- Fig. 13: eine Darstellung analog zu Fig. 10 in einer Ausführungsvariante,
- Fig. 14: eine Schnittansicht eines Einzelteils der Ausführung nach Fig. 13,
- Fig. 15: eine Schnittansicht durch den Bereich eines Aufnahmekäfigs für ein mehrteiliges, aus mehreren Einzelelementen bestehendes Halteelement mit Darstellung eines der Einzelelemente beim Einsetzen in den Aufnahmekäfig,
- Fig. 16: einen Längsschnitt durch eine erfindungsgemäße Steckkupplung (analog zu Fig. 1 bzw. 2) in einer bezüglich eines Sicherungselementes alternativen Ausgestaltung, wobei in der oberen Figurenhälfte eine Sicherungsstellung gegen Lösen und in der unteren Figurenhälfte eine Lösestellung veranschaulicht sind,
- Fig. 17: eine axiale Ansicht des Sicherungselementes nach Fig. 16,
- Fig. 18: einen Axialschnitt des Sicherungselementes in der Schnittebene XVIII-XVIII gemäß Fig. 17,
- Fig. 19: eine weitere Ausführungsform der erfindungsgemäßen Steckkupplung in einem Längsschnitt analog zu Fig. 1, untere Zeichnungshälfte, d.h. in der Montagestellung (Schnitt B-D gemäß Fig. 21),
- Fig. 20: einen Querschnitt A-A gemäß Fig. 19,
- Fig. 21: einen Querschnitt C-C gemäß Fig. 19,
- Fig. 22: einen Längsschnitt wie in Fig. 19, jedoch mit für den Lösevorgang weiter eingestecktem Steckerteil (Schnitt F-H gemäß Fig. 24),
- Fig. 23: einen Schnitt E-E gemäß Fig. 22 zur Erläuterung des Vorgangs beim Entsichern eines Sicherungselementes,
- Fig. 24: einen Schnitt G-G gemäß 22,
- Fig. 25 und 26: Teilansichten analog zu Fig. 22 in verschiedenen Stellungen beim Entnehmen des Steckerteils,
- Fig. 27 bis 32: Darstellungen entsprechend den Fig. 19 bis 24 in einer weiteren Ausführungsvariante der erfindungsgemäßen Steckkupplung.

In den verschiedenen Figuren der Zeichnung sind gleiche Teile stets mit den gleichen Bezugszeichen versehen und werden daher in der Regel auch jeweils nur einmal beschrieben.

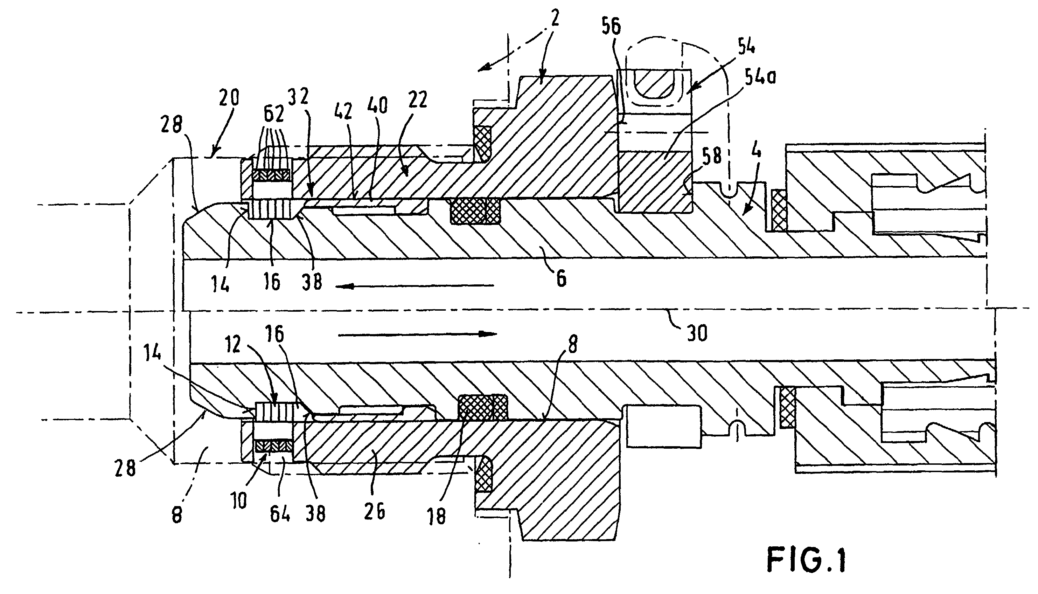

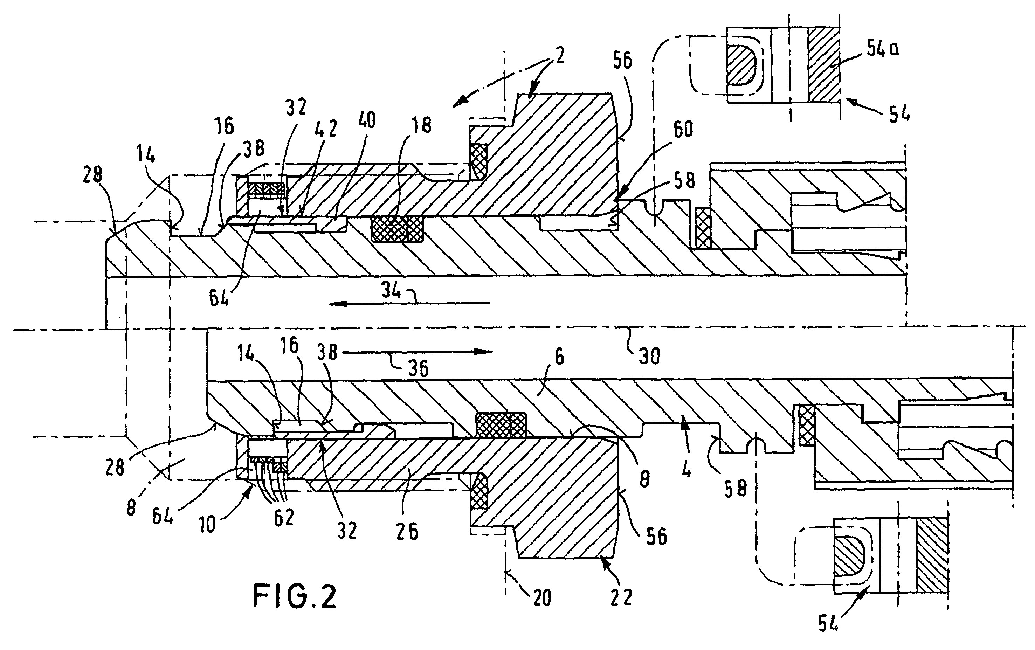

Wie sich beispielsweise aus Fig. 1 und 2 ergibt, besteht eine erfindungsgemäße Steckkupplung aus zwei Kupplungsteilen, nämlich einem Gehäuseteil 2 und einem Steckerteil 4. Das Steckerteil 4 ist mit einem im wesentlichen zylindrischen Steckerschaft 6 umfangsgemäß abgedichtet in eine Aufnahmeöffnung 8 des Gehäuseteils 2 einsteckbar und im eingesteckten Zustand über eine Verriegelungseinrichtung 10 gegen Lösen arretierbar. Hierzu weist die Verriegelungseinrichtung 10 bevorzugt ein in radialer Richtung elastisch verformbares Halteelement 12 auf, das in dem Gehäuseteil 2 gelagert ist und zum Arretieren des Steckerteils 4 im eingesteckten Zustand eine Raststufe 14 des Steckerschaftes 6 form- oder kraftformschlüssig hintergreift. Dieser Verriegelungszustand ist in Fig. 1 dargestellt.

Vorzugsweise ist die Raststufe 14 durch eine - im dargestellten Beispiel als Außenringnut mit insbesondere zylindrischer Nutgrundfläche am Steckerschaft 6 angeordnete - Haltenut 16 gebildet. Zur umfangsgemäßen Abdichtung sitzt eine Umfangsdichtung 18 in einer weiteren Ringnut des Steckerschaftes 6.

Um vor allem eine einfache Montage/Demontage des Halteelements 12 zu gewährleisten, besteht in den bevorzugten Ausführungsformen das Gehäuseteil 2 aus zwei lösbar miteinander verbundenen Teilen, und zwar aus einem nur angedeuteten, beliebigen Basisteil 20 und einem Verschlußteil 22.

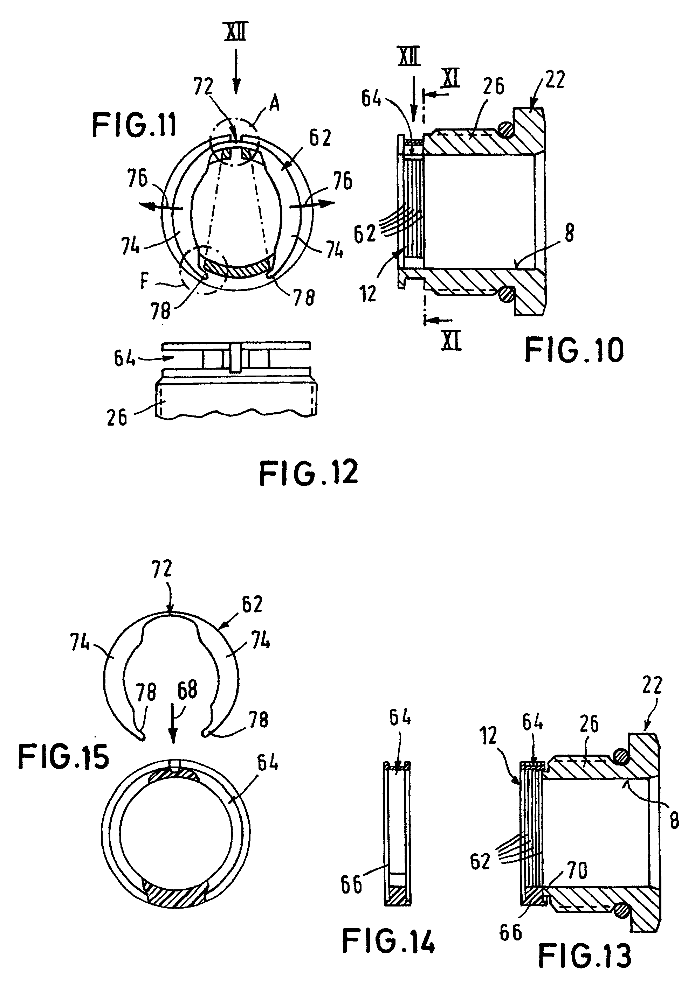

Das Verschlußteil 22 kann - wie dargestellt - als ein im wesentlichen hohlzylindrisches und dabei einen Teil der Aufnahmeöffnung 8 bildendes, bereichsweise in eine Öffnung des Basisteils 20 einsetzbares Einsatzteil 26, beispielsweise in Form einer Überwurf schraube, ausgebildet sein. Hierzu wird auch auf Fig. 10 und 13 verwiesen.

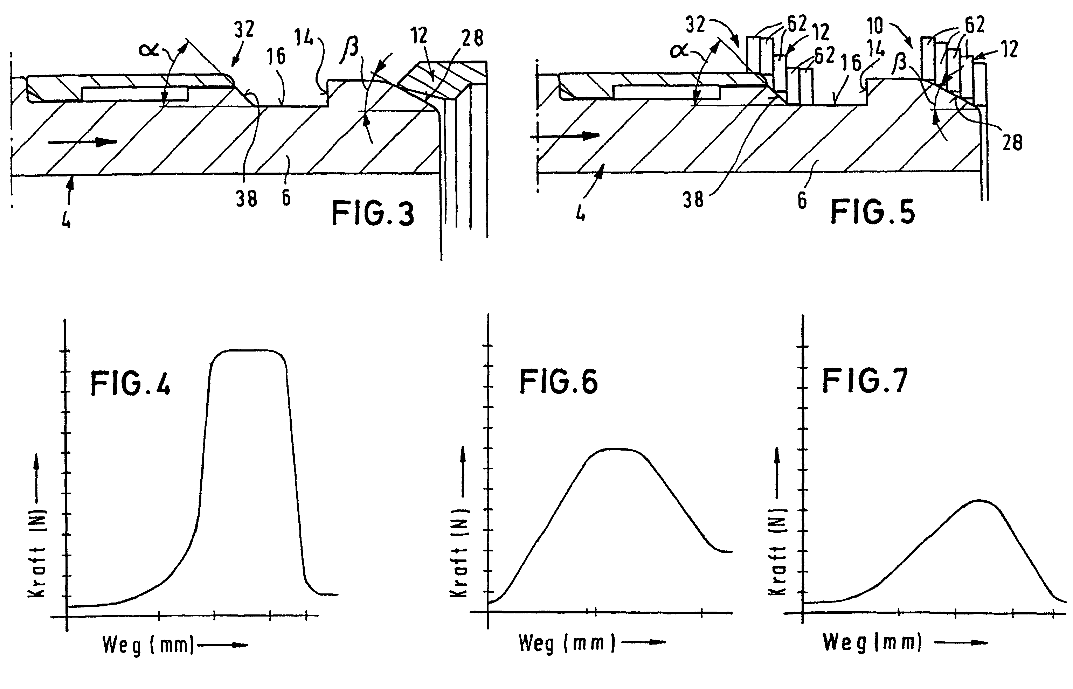

Zum radialelastischen Spreizen des Halteelementes 12, welches bereichsweise in die Aufnahmeöffnung 8 und damit in den Querschnittsbereich des Steckerschaftes 6 hineinragt (vgl. auch Fig. 11), weist das Steckerteil 4 am freien Ende des Steckerschaftes 6 eine Außenkonusfläche 28 auf. Gemäß Fig. 3, 5 und 8 schließt diese Außenkonusfläche 28 mit der Steckachse 30 einen Konuswinkel β ein.

Um nun ein einfaches und komfortables Lösen des Steckerteils 4 aus seiner Montagestellung zu ermöglichen, ist eine spezielle Löseeinrichtung 32 vorgesehen. Gemäß Fig. 2 ist diese Löseeinrichtung 32 derart ausgebildet, daß ausgehend von der Montagestellung (Fig. 1) durch weitergehendes Einstecken des Steckerteils 4 in Pfeilrichtung.34 das Halteelement 12 in eine die Haltenut 16 freigebende Lösestellung verformt und hierdurch entriegelt werden kann. Diese Stellung ist in Fig. 2 in der oberen Hälfte veranschaulicht. Die Löseeinrichtung 32 hält dann das Halteelement 12 so in dieser Lösestellung, daß gemäß Fig. 2, untere Hälfte, das Steckerteil 4 ungehindert in Pfeilrichtung 36 aus der Aufnahmeöffnung 8 herausgezogen werden kann, ohne daß hierbei das Halteelement 12 wieder in die Haltenut 16 einrasten kann.

Hierzu ist zunächst vorgesehen, daß die Haltenut 16 auf ihrer der Raststufe 14 axial entgegengesetzten Seite von einer konusförmigen Schrägfläche 38 begrenzt ist, die bei einer axialen Einsteckbewegung durch Konuswirkung analog zur Außenkonusfläche 28 das Halteelement 12 zum Entriegeln verformt. Ferner ist auf der Seite des die Haltenut 16 aufweisenden Kupplungsteils - wie dargestellt des Steckerteils 4 - ein hülsenförmiger Verschlußschieber 40 derart relativverschiebbar geführt, daß das Halteelement 12 in der Lösestellung gemäß Fig. 2 zur radialen Auflage auf einer Umfangsfläche 42 des Verschlußschiebers 40 gelangt. Hierdurch wird das Halteelement 12 zwangsweise in der Lösestellung gehalten. Durch die Stecker-Entnahmebewegung in Pfeilrichtung 36 erfolgt durch eine wenigstens. kraftschlüssige Anlage zwischen dem Haltelement 12 und dem Verschlußschieber 40 eine Relativbewegung derart, daß die Haltenut 16 von dem Verschlußschieber 40 überdeckt und so gegen Einrasten des Halteelements 12 verschlossen wird. Daher kann das Halteelement 12, welches ja im Bereich des Verschlußschiebers 40 sitzt, nicht in die Haltenut 16 einrasten, sondern rutscht schließlich ganz von dem Verschlußschieber 40 weg, wenn das Steckerteil 4 weitergehend herausgezogen wird. Dieser Vorgang ist in Fig. 2, untere Hälfte, veranschaulicht.

Zweckmäßigerweise ist der Verschlußschieber 40 in Umfangsrichtung an einer Stelle durchgehend unterbrochen (geschlitzt), um eine leichte Montage bzw. Demontage zu ermöglichen.

Da in der erfindungsgemäβen Ausführungsform das Halteelement 12 im Gehäuseteil 2 gelagert ist, während die Haltenut 16 am Steckerteil 4 bzw. am Steckerschaft 6 angeordnet ist, ist der Verschlußschieber 40 auf dem Steckerteil bzw. Steckerschaft 6 verschiebbar geführt. Durch eine Verschiebung entsprechend der Einsteckrichtung (Pfeil 34) wird hierbei der Verschlußschieber 40 in eine Verschlußstellung gebracht, in der er die Haltenut 16 überdeckt und gegen Einrasten des Halteelements 12 verschließt. Durch eine entgegengesetzte Verschiebung entsprechend der Entnahmerichtung (Pfeil 36) wird der Verschlußschieber 40 in seine Öffnungsstellung gebracht, in der er die Haltenut 16 zum Einrasten des Halteelements 12 freigibt.

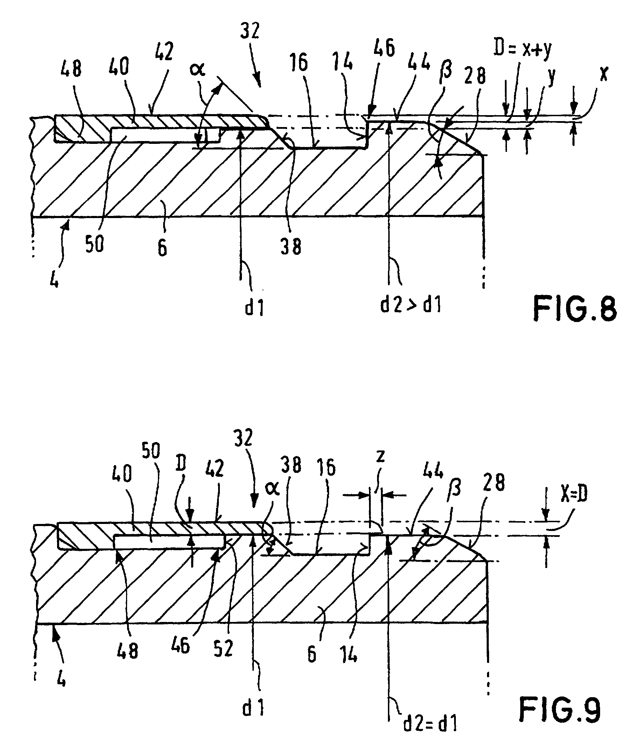

Hierzu ist gemäß Fig. 8 und 9 erfindungsgemäβ vorgesehen, daß der Verschlußschieber 40 auf seiner dem freien, einzusteckenden Ende des Steckerschafts 6 zugekehrten Seite die äußere Umfangsfläche 44 des Steckerschafts 6 derart mit'einem radialen Überstand x überragt, daß beim Einstecken des Steckerteils 4 der Verschlußschieber 40 durch Anlagekontakt am Halteelement 12 selbsttätig in seine das Einrasten ermöglichende Öffnungsstellung gebracht wird. Gemäß Fig. 8 ist der radiale Überstand x kleiner als die Dicke D des Verschlußschiebers 40, so daß der Verschlußschieber 40 in seiner Verschlußstellung (gestrichelt eingezeichnet) in Anlagekontakt mit der Raststufe 14 gelangt. Somit bildet die Raststufe 14 in dieser Ausführungsform einen Endanschlag 46 für den Verschlußschieber 40.

In der Ausführungsalternative nach Fig. 9 entspricht der radiale Überstand x der Dicke D des Verschlußschiebers 40. Zudem überragt der Verschlußschieber 40 den Bereich der Haltenut 16 in axialer Richtung um einen Überstand z. Bei dieser Ausführung wird der axiale Endanschlag 46 auf andere Weise gebildet. Der Verschlußschieber 40 besitzt in seinem der Haltenut 16 axial abgekehrten Endbereich einen radial nach innen weisenden, ringstegförmigen Führungsansatz 48, der in einer nutförmigen, der Haltenut 16 in Löserichtung (Pfeil 34) benachbarten Führungsvertiefung 50 des Steckerschafts 6 geführt ist. Hierbei kann der Endanschlag 46 durch eine mit dem Führungsansatz 48 zusammenwirkende Begrenzungsfläche 52 der Führungsvertiefung 50 gebildet sein. In diesem Fall weisen die Umfangsflächen des Steckerschafts 6 beidseitig der Haltenut 16 den gleichen Durchmesser d1 = d2 auf. Im Gegensatz dazu ist im Fall der Fig. 8 der Durchmesser d1 im Bereich des Verschlußschiebers 40 kleiner als der Durchmesser d2 im Bereich der vorderen Umfangsfläche 44. Daraus resultiert, daß im Falle der Fig. 9 der Verschlußschieber 40 mit einem inneren Teilbereich seiner Dicke D an der Raststufe 14 zur Anlage gelangt, wobei dieser Teilbereich mit y gekennzeichnet ist. Daraus folgt, daß x + y = D ist.

Wie sich ferner aus den Fig. 3, 5, 8 und 9 ergibt, schließt die die Haltenut 16 begrenzende, für den Löse- bzw. Entriegelvorgang vorgesehene Schrägfläche 38 mit der Steckachse 30 einen Konuswinkel α ein. Es ist vorteilhaft, diesen Konuswinkel α gegenüber dem Konuswinkel β der vorderen Konusfläche 28 unterschiedlich groß zu bemessen. Vorzugsweise ist der Konuswinkel α größer als der Konuswinkel β. Hierdurch wird vorteilhafterweise erreicht, daß sich die Steckkraft beim Einstecken und Lösen voneinander unterscheiden, wie dies in den Fig. 6 und 7 veranschaulicht ist. Insbesondere ist die Steckkraft zum Lösen bzw. Entriegeln gemäß Fig. 6 größer als zum normalen Einstecken gemäß Fig. 7. Der Monteur kann somit einen deutlichen Unterschied spüren. In der dargestellten Ausführungsform beträgt der Konuswinkel α vorzugsweise etwa 45°, während der Konuswinkel β vorzugsweise etwa 30° beträgt.

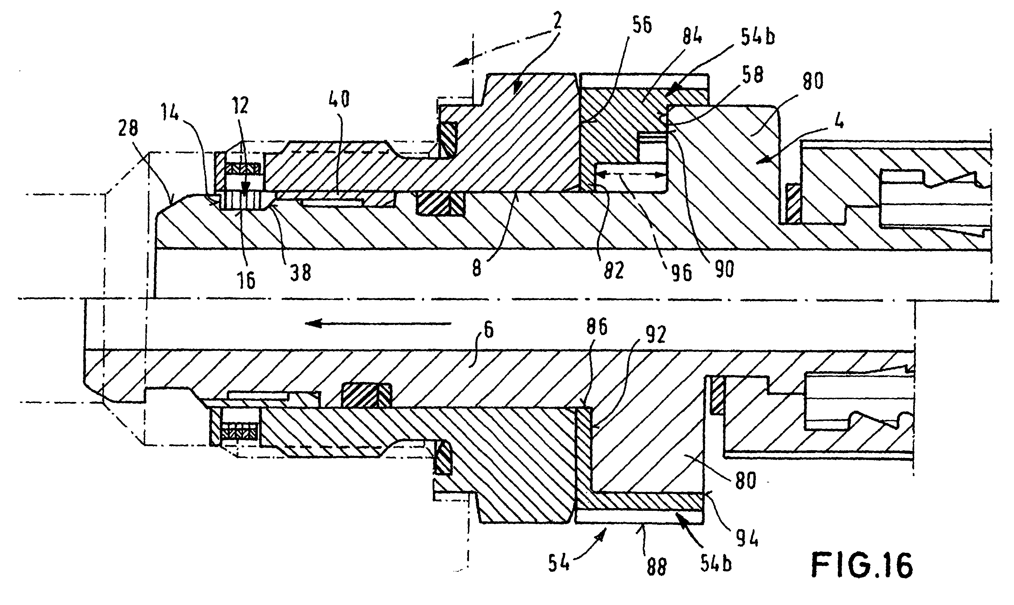

Gemäß Fig. 1 un 2 bzw. Fig. 16 bis 18 ist es zweckmäßig, wenn ein Sicherungselement 54 vorgesehen ist, um in der Montagestellung (Fig. 1 bzw. 16, obere Hälfte) zu vermeiden, daß die Kupplung ungewollt durch Einschieben des Steckerteils 4 gelöst wird. Hierzu kann das Sicherungselement 54 in der Montagestellung derart lösbar zwischen dem Gehäuseteil 2 und dem Steckerteil 4 angeordnet sein, daß die weitergehende, zum Lösen vorgesehene Einsteckbewegung (Pfeilrichtung 34 in Fig. 2) blockiert ist und erst nach Lösen bzw. Entfernen des Sicherungselementes 54 freigegeben wird. Das Sicherungselement 54 kann auch so ausgestaltet sein, daß es anstatt lösbar in bestimmter Weise unverlierbar derart beweglich angeordnet ist, daß nach einer bestimmten (Umschalt-) Bewegung, z.B. einer Drehbewegung des Sicherungselements 54 das Lösen entweder gesperrt oder freigegeben wird.

Im dargestellten Ausführungsbeispiel nach Fig. 1 und 2 wird das Sicherungselement 54 durch ein elastisches Klammeroder Ringelement 54a gebildet, das lösbar auf dem Steckerteil 4 als Distanzstück zwischen zwei Anschlagflächen 56 und 58 der beiden Kupplungsteile 2, 4 sitzt. In Fig. 2 ist veranschaulicht, daß nach Entfernen des Sicherungselements 54 das Steckerteil 4 weitergehend in Pfeilrichtung 34 einsteckbar ist, bis die beiden Anschlagflächen 56, 58 zur Anlage gelangen; diese Anlagestelle ist in Fig. 2, obere Hälfte, mit der Bezugsziffer 60 gekennzeichnet. Das Erreichen dieser Anlagestelle 60 gibt dem Monteur sicheren Aufschluß darüber, daß die entriegelte und so fixierte Ste1-lung des Halteelements 12 erreicht ist und er deshalb mit der Entnahmebewegung in Pfeilrichtung 36 beginnen kann.

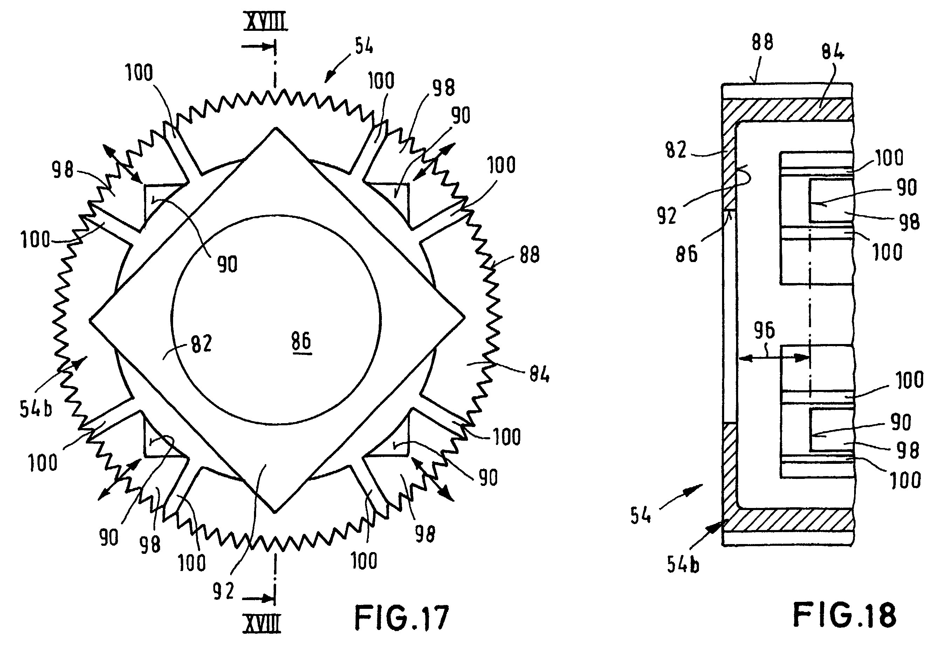

Im Gegensatz dazu ist gemäß Fig. 16 bis 18 das Sicherungselement 54 als ein unverlierbar, insbesondere auf dem Steckerteil 4 zwischen zwei Schaltstellungen verdrehbar, angeordnetes Riegelelement 54b ausgebildet. Die steckerseitige Anschlagfläche 58 ist Teil eines flanschartig radial vorspringenden, im Querschnitt polygonförmigen, insbesondere quadratischen Steckerabschnittes 80. Das Sicherungselement 54 ist etwa kappenartig mit einem Boden 82 und einer Umfangswandung 84 ausgebildet. Der Boden 82 weist eine Durchführöffnung 86 für den Steckerschaft 6 auf. Die Umfangswandung 84 weist auf ihrem Außenumfang zweckmäßigerweise eine Rändelung 88 auf. Der Steckerabschnitt 80 greift in das kappenartige Sicherungselement 54 ein, wobei zwei verschiedene Stellungen möglich sind. In einer ersten relativen Drehstellung (Arretierstellung; obere Hälfte der Fig. 16) sitzt der Steckerabschnitt 80 mit seinen Ecken auf ersten Auflageflächen 90 derart, daß das Sicherungselement 54b - analog zu dem oben beschriebenen Sicherungselement 54a nach Fig. 1 und 2 - als Distanzhalter zwischen den Anschlagflächen 56 und 58 wirkt, um die zum Lösen erforder-1iche weitergehende Einsteckbewegung zu blockieren. Wird das Sicherungselement 54b relativ zu dem Steckerteil 4 um vorzugsweise etwa 45° in eine zweite Schaltstellung (Lösestellung; untere Hälfte der Fig. 16) verdreht, so kann der Steckerabschnitt 80 weiter axial in einen Freiraum des kappenartigen Sicherungselementes 54b eintreten, bis er zur Auflage auf einer zweiten Auflagefläche 92 gelangt. Vorzugsweise füllt in dieser Stellung der Steckerabschnitt 80 das kappenartige Sicherungselement 54b in axialer Richtung gerade ganz aus, d.h. die rückwärtigen Oberflächen des Steckerabschnitts 80 und des Sicherungselements 54b liegen im wesentlichen in einer gemeinsamen Ebene (vgl. die Bezugsziffer 94 in Fig. 16); dies gibt dem Monteur dann einen deutlich sichtbaren Aufschluß darüber, daß die Löseposition erreicht ist und er daher mit der Entnahmebewegung beginnen kann. Gemäß Fig. 18 sind die ersten Auflageflächen 90 von der zweiten Auflagefläche 92 um einen Axialabstand 96 beabstandet, der mindestens gleich der zum Entriegeln erforderlichen Verschiebestrecke des Steckerteils 4 ist.

Es ist zudem vorteilhaft, wenn zumindest die ersten Auflageflächen 90 jeweils an sich axial erstreckenden, radial federelastisch beweglichen Armen 98 gebildet sind. Die Arme 98 werden aus der Umfangswandung 84 durch jeweils beidseitige axiale Schlitze 100 abgeteilt. Hierdurch wird auch eine Rastung in der Arretierstellung gewährleistet. Die Schlitze 100 erstrecken sich in axialer Richtung über die ersten Auflageflächen 90 hinaus in Richtung des Bodens 82, um eine gute Elastizität der Arme 98 zu erreichen.

In einer vorteilhaften Ausgestaltung der Erfindung ist vorgesehen, daß das Halteelement 12 derart aus mindestens zwei in Steckrichtung gesehen hintereinanderliegenden Einzelelementen 62 besteht, daß beim Steckvorgang - vgl. hierzu insbesondere Fig. 5 - die Einzelelemente 62 sukzessive radial verformt werden und sukzessive nacheinander in die Haltenut 16 einrasten bzw. die Raststufe 14 hintergreifen. Wie aus dem zugehörigen Diagramm in Fig. 7 deutlich wird, wird hierdurch ein relativ flacher Verlauf der insgesamt relativ geringen Steckkraft über den Steckweg hinweg erreicht. Somit ist ein in mehrere - insbesondere vier bis sechs lamellenförmige und paketartig aneinanderliegende - Einzelelemente gesplittetes Halteelement vorgesehen. Dies führt dazu, daß beim Steckvorgang zum radialen Verformen der Einzelelemente jeweils eine relativ geringe Kraft ausreicht, wobei auch die Summe der Einzelkräfte vorteilhafterweise geringer als bei einem vergleichbaren einteiligen Halteelement ist. Dies liegt daran, daß zu Beginn des Einsteckens zunächst nur eines der Einzelelemente verformt zu werden braucht. Bei fortschreitendem Einstecken erfolgt die Verformung der weiteren Einzelelemente dann sukzessive, bis die ersten Einzelelemente bereits wieder durch elastische Rückverformung hinter die Raststufe einrasten, was eine Reduzierung der Steckkraft insgesamt darstellt. Wenn alle Einzelelemente eingerastet sind, gewährleisten diese eine relativ hohe Haltekraft (bedingt durch ihre bevorzugte paketartige Anordnung), da eine gute Abstützung der in Löserichtung wirkenden Kräfte über alle aneinanderliegenden Einzelelemente gemeinsam erreicht wird. Durch die erfindungsgemäße "Splittung" ist es zudem möglich, die Einzelelemente aus Federstahlblech herzustellen. Durch ihre relativ dünne, lamellenförmige Ausgestaltung sind auch dabei die Steckkräfte noch vergleichsweise gering, es wird jedoch eine besonders hohe Haltekraft erreicht, so daß die erfindungsgemäße Steckkupplung für hohe Drücke geeignet ist, vorteilhafterweise aber dennoch - bedingt durch die sukzessive Betätigung der Einzelelemente - von Hand gesteckt werden kann.

Im Vergleich dazu ist in Fig. 3 eine Ausführungsform mit einem alternativen Halteelement 12 dargestellt, welches als einteiliges Blockhalteelement ausgebildet ist. Gemäß dem Diagramm in Fig. 4 wird über den Steckweg hinweg stets das gesamte Halteelement 12 elastisch verformt, was insgesamt zu einer steil ansteigenden und großen Steckkraft über den gesamten Weg hinweg führt.

In Fig. 5 ist zusätzlich zu dem Einsteckvorgang auch der Löse- bzw. Entriegelvorgang veranschaulicht, wobei die Einzelelemente des Halteelements 12 über die Schrägfläche 38 der Haltenut 16 verformt werden. Fig. 6 zeigt das zugehörige Steckkraft-Diagramm; durch Vergleich mit Fig. 7 wird deutlich, daß durch die verschiedenen Winkel α und β erreicht wird, daß sich der Einsteckvorgang merklich, d.h. für den Monteur deutlich spürbar, vom Entriegelvorgang unterscheiden läßt, da insbesondere die für das Entriegeln erforderliche Steckkraft (Fig. 6) größer als die "normale" Einsteckkraft (Fig. 7) ist.

Zweckmäßigerweise sind die Einzelelemente lamellenförmig als radial elastisch verformbare Klammern oder Federringe ausgebildet. Diese bestehen bevorzugt aus Metall, insbesondere aus Federstahlblech. Es können zwei bis mindestens sechs Einzelelemente vorgesehen sein. In den bevorzugten Ausführungsformen handelt es sich um fünf gleichartig lamellenförmige Einzelelemente, die praktisch paketartig aneinanderliegen.

Zweckmäßigerweise sind die Einzelelemente 62 in einem Aufnahmekäfig 64 unverlierbar und in einer steckbereiten Position gehaltert.

In einer ersten Ausführungsform nach Fig. 1 und 2 sowie Fig. 10 bis 12 ist dieser Aufnahmekäfig 64 integraler Bestandteil des Verschlußteils 22. Der Aufnahmekäfig 64 wird bevorzugt durch eine bestimmte Querschlitzung am einzusetzenden Ende des Einsatzteils 26 gebildet.

In einer zweiten Ausführungsform nach Fig. 13 und 14 wird der Aufnahmekäfig 64 von einem separaten, z.B. aus Kunststoff bestehenden Ringelement 66 gebildet. Dieses Ringelement ist gesondert in Fig. 14 dargestellt. Es ist ebenfalls entsprechend quergeschlitzt, so daß die Einzelelemente 62 gemäß Fig. 15 quer zur Steckachse 30 in Pfeilrichtung 68 in den Aufnahmekäfig 64 eingeführt werden können. Gemäß Fig.13 sitzt das Ringelement 66 zweckmäßigerweise auf einem Ringansatz 70 des Verschlußteils 22 bzw. des Einsatzteils 26. In der montierten Stellung gemäß Fig. 1 und 2 sitzt dann der Aufnahmekäfig 64 mit den Einzelelementen 62 innerhalb des Gehäuseteils 2.

Wie sich insbesondere aus Fig. 11 und 15 jeweils ergibt, besteht jedes Einzelelement 62 zweckmäßigerweise aus zwei über ein Federgelenk 72 verbundenen und dadurch in radialer Richtung elastisch beweglichen Federarmen 74. Die radialelastische Beweglichkeit ist in Fig. 11 durch Pfeile 76 veranschaulicht. Das Federgelenk 72 wird bevorzugt von einem verschmälerten Verbindungsabschnitt zwischen den beiden Federarmen 74 gebildet. In diesem Bereich liegen gemäß Fig. 11 die Einzelelemente 62 innerhalb des Aufnahmekäfigs 64 an (Anlagebereich A in Fig. 11) Die Federarme 74 selbst weisen über einen Umfangsbereich von jeweils etwa 90° hinweg eine zumindest annähernd kreisringscheibenförmige Kontur auf, die bereichsweise mit der Raststufe 14 bzw. Haltenut 16 des Steckerteils 4 zusammenwirkt. Durch diese Ausgestaltung verformen sich die Federarme 74 selbst beim Steckvorgang praktisch nicht, vielmehr bewegen sie sich im wesentlichen durch eine Verformung im Bereich des Federgelenkes 72 in Richtung der Pfeile 76 in Fig. 11. Diese beschriebene, bevorzugte Ausgestaltung gewährleistet sehr geringe Betätigungskräfte, indem die Einzelelemente 62 sehr leicht spreizbar sind.

Gemäß Fig. 15 erfolgt das Einsetzen der Einzelelemente 62 in den Aufnahmekäfig 64 mit den Federarmen 74 voran, bis das Federgelenk 72 zur Anlage gelangt. Um dabei die Einzelelemente 62 unverlierbar zu fixieren, weisen die Federarme 74 an ihren freien Enden jeweils einen Halteansatz 78 derart auf, daß im eingesetzten Zustand die Halteansätze 78 kraft- und/oder formschlüssig mit dem Aufnahmekäfig 64 zusammenwirken. Hierzu wird auf Fig. 11 und den darin hervorgehobenen Fixierbereich F verwiesen.

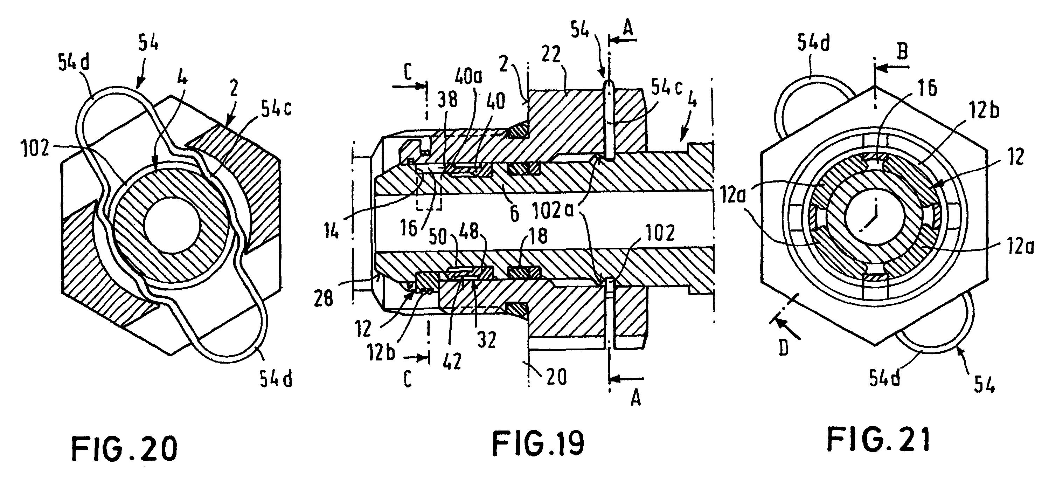

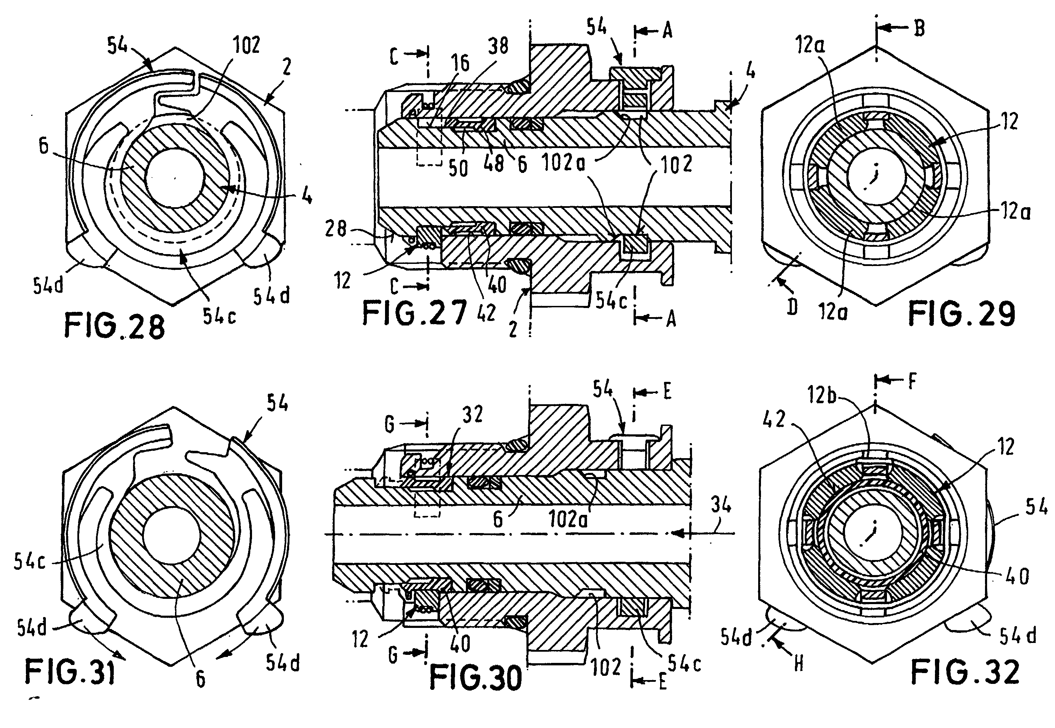

In den Fig. 19 bis 26 einerseits sowie den Fig. 27 bis 32 andererseits sind weitere Ausführungsformen der erfindungsgemäßen Steckkupplung veranschaulicht. Dabei sind zunächst gleiche Teile wie in den vorhergehenden Figuren mit den gleichen Bezugszeichen versehen und werden deshalb nicht noch einmal erläutert.

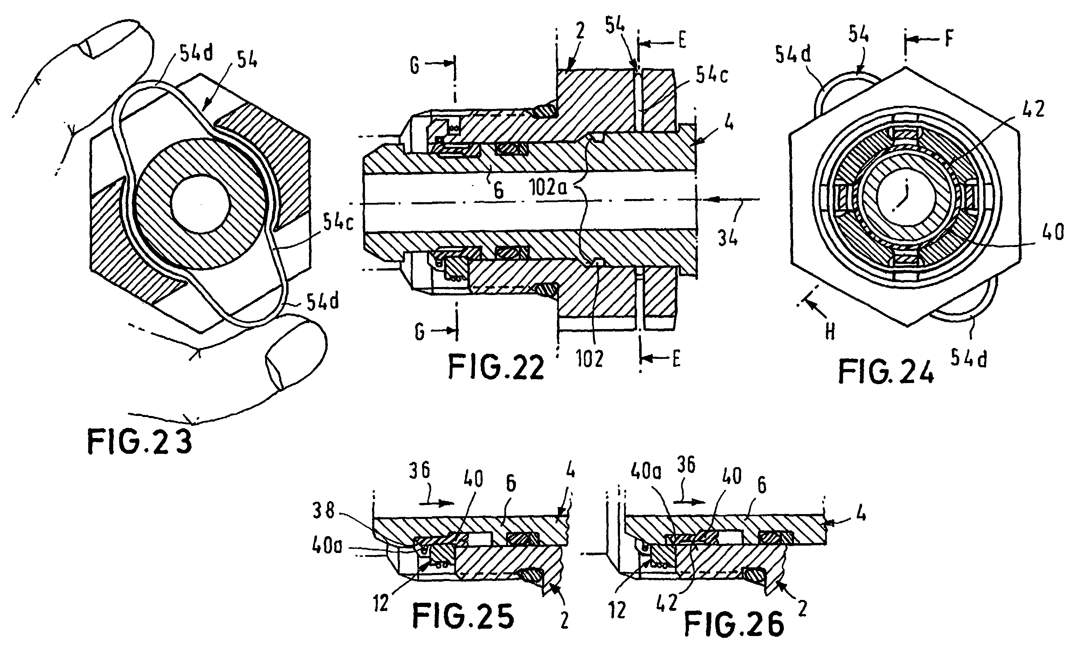

Bei diesen Ausführungsformen der Fig. 19 bis 32 ist vor allem unterschiedlich, daß der Verschlußschieber 40 und das auf seiner Umfangsfläche 42 zur Auflage gelangende Halteelement 12 nicht nur kraftschlüssig, sondern vorteilhafterweise kraftformschlüssig zusammenwirken. Zwischen diesen beiden Teilen 12 und 40 ist somit eine schnappbare Kraftformschlußverbindung gebildet, wozu zweckmäßigerweise der Verschlußschieber 40 im Bereich seiner Umfangsfläche 42 eine geringfügige radiale Nutvertiefung aufweist, in die das Halteelement 12 in der Lösestellung einrastet. Hierdurch wird eine bessere, d.h. sicherere Überführung des Verschlußschiebers 40 in seine die Haltenut 16 verschließende Verschlußstellung gewährleistet. Denn bei der Entnahmebewegung des Steckerteils 4 in Pfeilrichtung 36 (s. insbesondere Fig. 25 und 26) wird der Verschlußschieber 40 durch das mit diesem kraftformschlüssig verbundene Halteelement 12 sicher festgehalten, so daß die Haltenut 16 jedenfalls geschlossen wird. Bei weitergehendem Herausziehen des Steckerteils 4 kann das Halteelement 12 gemäß Fig. 26 unter geringfügiger radialer Aufweitung von dem Verschlußschieber 40 wegrutschen, d.h. sich aus der radialen Nutvertiefung heraus und über einen diese begrenzenden Ringsteg oder Ringwulst 40a hinweg bewegen (siehe insbesondere Fig. 25 und 26).

Dabei ist zudem vorgesehen, daß die Haltenut 16 zwischen dem Verschlußschieber 40 und der axial gegenüberliegenden Begrenzungsfläche 14 des Kupplungsteils gebildet ist. Die die Haltenut 16 auf der anderen Seite begrenzende Schrägfläche 38 ist somit Bestandteil des Verschlußschiebers 40. Durch Verschiebung des Verschlußschiebers 40 wird somit die gesamte Haltenut 16 axial verkleinert und schließlich verschlossen bzw. durch den Verschlußschieber 40 nahezu ausgefüllt. Dadurch wird über die Schrägfläche 38 das Halteelement 12 verformt und aus der Haltenut in die Lösestel-lung verdrängt.

Die Ausführungsformen nach Fig. 19 bis 32 unterscheiden sich ferner von den übrigen Ausführungen durch die Art des jeweils vorgesehenen Sicherungselementes 54. In beiden Fä1-1en ist dieses als Federklammer 54c ausgebildet, die derart unverlierbar sowie in einer sicherungsbereiten Stellung in einer Querschlitzöffnung des Gehäuseteils 2 sitzt, daß sie beim Einstecken des Steckerteils 4 selbsttätig bereichsweise in eine äußere Ringnut 102 des Steckerteils 4 einrastet. Dabei ist diese Federklammer 54c mittels manuell von außen zugänglicher Betätigungsabschnitte 54d derart elastisch verformbar, daß sie die Ringnut 102 des Steckerteils 4 für die Entnahme bzw. für die dazu erforderliche weitergehende Einsteckbewegung für die Dauer dieser Betätigung freigibt. Vorteil dieser Ausführungen ist vor allem, daß nach dem Einstecken des Steckerteils unmittelbar selbsttätig die Sicherung gegen ungewolltes Lösen gewährleistet wird, weil die Federklammer 54c im unbetätigten Zustand stets selbsttätig federkraftbedingt ihre sicherungsbereite Stellung einnimmt. Diese Sicherung ist deshalb nicht mehr von einer bestimmten Tätigkeit einer Bedienungsperson abhängig. Das Sicherungselement 54 bleibt durch die unverlierbare Halterung stets Bestandteil der erfindungsgemäßen Steckkupplung (sehr geringe Verlustgefahr).

Zum Lösen des Steckerteils 4 bzw. für die dazu erforderliche weitergehende Einsteckbewegung braucht somit lediglich die Federklammer 54c kurzzeitig zur Freigabe der Ringnut 102 betätigt zu werden. Dadurch kann dann das Steckerteil 4 zum Entriegeln des Halteelementes 12 eingesteckt und nachfolgend entnommen werden. Bei dieser Entnahmebewegung könnte die Federklammer 54c grundsätzlich wieder in die Ringnut 102 einrasten, sofern die Federklammer 54c nicht weiterhin betätigt wird. Um zu erreichen, daß das Steckerteil 4 auch tatsächlich ohne erneutes Betätigen der Federklammer 54c entnommen werden kann, ist bevorzugt vorgesehen, daß die äußere Ringnut 102 des Steckerteils 4 auf ihrer in Einsteckrichtung weisenden Seite von einer Konusfläche 102a begrenzt ist. Hierbei handelt es sich insbesondere um eine Fase von etwa 45°. Über diese Konusfläche 102a wird die eingerastete Federklammer 54c durch die Entnahmebewegung wieder nach außen gedrängt, so daß das Steckerteil 4 entnommen werden kann. Diese Ausgestaltung stellt einen besonderen Sicherheitsaspekt dar, weil das Sicherungselement 54 allein, d.h. ohne das Halteelement 12, nicht zur Arretierung des Steckerteils 4 dienen kann.

Was nun die Ausführungsformen im einzelnen betrifft so ist die Federklammer 54c bei der Ausführung nach Fig. 19 bis 24 von einem im wesentlichen oval gebogenen Federdrahtstück gebildet. Gemäß Fig. 20 sind die längeren Ovalseiten so geformt, daß sie selbsttätig etwa tangential in die Ringnut 102 eingreifen. Durch manuellen Druck auf die schmalen Ovalseiten gemäß Fig. 23 können die Längsseiten voneinander weg gespreizt und so aus der Ringnut 102 bewegt werden.

Im Falle der Ausführung nach Fig. 27 bis 32 handelt es sich bei der Federklammer 54c um einen im wesentlichen ringförmigen, an einer Stelle des Ringumfangs durchgehend geschlitzten und hierdurch radialelastisch verformbaren Kunststoff-Formring. Ein solcher federelastischer Ring ist - als eigentliches Halteelement - grundsätzlich bekannt, wozu beispielsweise auf die DE-C-25 47 411 sowie auch auf die DE-C-27 17 908 verwiesen wird. Dieser Federring ist an einer Stelle durch einen insbesondere labyrinthförmig ausgebildeten, radialen Schlitz unterbrochen, und er besitzt zwei angeformte Federarme, die etwa im Bereich des radialen Schlitzes beginnen und kreisförmig etwa koaxial verlaufen und mit ihren freien Enden die Betätigungsabschnitte 54d bilden. Durch Zusammendrücken dieser Betätigungsabschnitt 54d in Richtung der in Fig. 31 eingezeichneten Pfeile kann der Kunststoff-Formring gespreizt werden, bis er die Stecker-Ringnut 102 freigibt.

Es sei noch erwähnt, daß auch bei den Ausführungen nach Fig. 19 bis 32 der Verschlußschieber 40 mit dem Führungsansatz 48 in einer nutförmigen Führungsvertiefung 40 geführt ist. Jedoch geht hierbei diese Führungsvertiefung 50 unmittelbar in den Bereich der Haltenut 16 über.

Schließlich wird in den Ausführungen nach Fig. 19 bis 32 auch noch eine andere Art des Halteelementes 12 verwendet. Dieses ist hierbei ringförmig aus mehreren (hier z.B. vier) einzelnen Ringsegmenten 12a gebildet, wobei diese Ringsegmente 12a von einem konzentrischen Federringelement 12b derart-mit einer radial wirkenden Federkraft beaufschlagt werden, daß die - selbst bevorzugt im wesentlichen starren, formstabilen - Ringsegmente 12a jeweils in radialer Richtung beweglich sind. Einzelheiten hierzu sind in der deutschen Patentanmeldung 197 22 039.8 enthalten, auf die in vollem Umfang Bezug genommen wird.

## Patentansprüche

1. Steckkupplung für Druckmittelsysteme, bestehend aus zwei Kupplungsteilen, und zwar einem Gehäuseteil (2) und einem Steckerteil (4), wobei das Steckerteil (4) abgedichtet in eine Aufnahmeöffnung (8) des Gehäuseteils (2) einsteckbar und in einer eingesteckten Montagestellung (Fig. 1) mittels einer Verriegelungseinrichtung (10) gegen Lösen arretierbar ist, und wobei die Verriegelungseinrichtung (10) ein Halteelement (12) aufweist, das im Gehäuseteil (12) gelagert ist und in der Montagestellung (Fig. 1) in eine Haltenut (16) des Steckerteils (4) form- oder kraftformschlüssig eingreift, wobei eine Löseeinrichtung (32) derart vorgesehen ist, dass ausgehend von der Montagestellung (Fig. 1) durch weitergehendes Einstecken des Steckerteils (4) das Halteelement (12) in eine die Haltenut (16) freigebende Lösestellung (Fig. 2) gebracht und so in dieser Lösestellung gehalten wird, dass das Steckerteil (4) nachfolgend aus der Aufnahmeöffnung (8) entnehmbar ist (Fig. 2), wobei die Löseeinrichtung (32) einen hülsenförmigen, auf dem die Haltenut (16) aufweisenden Steckerteil (4) relatiwerschiebbar angeordneten, durch Bewegen des Steckerteils (4) betätigbaren Verschlußschieber (40) für die Haltenut (16) derart aufweist, dass das Halteelement (12) in der Lösestellung zur radialen Auflage auf einer Umfangsfläche (42) des Verschlußschiebers (40) gelangt und dadurch in der Lösestellung gehalten wird und bei der Stecker-Entnahmebewegung der Verschlußschieber (40) axial so in den Bereich der Haltenut (16) in eine Verschlußstellung bewegt wird, dass die Haltenut (16) vollständig von dem Verschlußschieber (40) überdeckt und für das Halteelement (12, 12a, 12b) geschlossen ist, so dass ein radiales Eingreifen des Halteelementes (12, 12a, 12b) in die Haltenut (16) ausgeschlossen ist,
**dadurch gekennzeichnet, dass** der hülsenförmige Verschlußschieber (40) auf seiner dem freien, einzusteckenden Ende des Steckerteils (4) zugekehrten Seite die Umfangsfläche (44) des Steckerteils (4) derart mit einem radialen Überstand (x) überragt, dass beim Einstecken des Steckerteils (4) der Verschlußschieber (40) durch Anlagekontakt an dem Halteelement (12) selbsttätig axial in eine die Haltenut (16) freigebende und dadurch das Einrasten des Halteelementes ermöglichende Öffnungsstellung gebracht wird.

2. Steckkupplung nach Anspruch 1,
**dadurch gekennzeichnet, dass** die Haltenut (16) derart axial einseitig von einer Schrägftäche (38) begrenzt ist, dass durch das weitergehende Einstecken des Steckerteils (4) das Halteelement (12) über die Schrägfläche (38) in die Lösestellung und auf die Umfangsfläche (42) des Verschlußschiebers (40) gebracht wird.

3. Steckkupplung nach Anspruch 1 oder 2,
**dadurch gekennzeichnet, dass** die die Haltenut (16) begrenzende Schrägfläche (38) Bestandteil des Kupplungsteils ist, wobei der Verschlußschieber (40) derart über die Haltenut (16) schiebbar ist, dass zur Stecker-Entnahmebewegung die Haltenut (16) von dem Verschlußschieber (40) überdeckt und so gegen Eingreifen des Halteelementes (12) in radialer Richtung verschlossen wird.

4. Steckkupplung nach Anspruch 2,
**dadurch gekennzeichnet, dass** die die Haltenut (16) begrenzende Schrägfläche (38) Bestandteil des Verschlußschiebers (40) ist, so dass die Haltenut (16) zwischen dem Verschlußschieber (40) und einer axial gegenüberliegenden Begrenzungsfläche (14) des Kupplungssteils gebildet ist, wobei durch Verschieben des Verschlußschiebers (40) die Haltenut (16) axial verkleinert und durch den Verschlußschieber (40) verschlossen bzw. ausgefüllt wird.

5. Steckkupplung nach einem oder mehreren der Ansprüche 1 bis 4,
**dadurch gekennzeichnet, dass** das Halteelement (12) in radialer Richtung elastisch verformbar ausgebildet ist und in der Montagestellung mit seiner gesamten, in axialer Richtung gemessenen Länge bzw. Dicke in die Haltenut (16) einrastet, wobei die axiale Dicke des Halteelementes (12) etwa gleich der axialen Länge der Haltenut (16) ist.

6. Steckkupplung nach einem oder mehreren der Ansprüche 1 bis 5,
**dadurch gekennzeichnet, dass** das Steckerteit (4) an seinem freien, einzusteckenden Ende eine äußere Konusfläche (28) zum Spreizen des Halteelements (12) aufweist.

7. Steckküpplung nach einem oder mehreren der Ansprüche 1 bis 6,
**dadurch gekennzeichnet, dass** der Verschlußschieber (40) derart relatiwerschiebbar auf dem Steckerteil (4) sitzt, dass er durch eine Verschiebung entsprechend der Einsteckrichtung (34) in eine Verschlußstellung gebracht wird, in der er die Haltenut (16) überdeckt und so gegen Einrasten des auf seiner äußeren Umfangsfläche (44) zur Auflage kommenden Halteelements (12) in radialer Richtung verschließt, und durch eine Verschiebung entsprechend der Entnahmerichtung (36) in eine öffnungsstellung gebracht wird, in der er die Haltenut (16) zum Einrasten des Halteelements (12) freigibt bzw. öffnet.

8. Steckkupplung nach einem oder mehreren der Ansprüche 1 bis 7,
**dadurch gekennzeichnet, dass** der Verschlußschieber (40) in seiner die Haltenut (16) überdeckenden Verschlußstellung axial an einem steckerteilseitigen Endanschlag (46) anliegt.

9. Steckkupplung nach Anspruch 8,
**dadurch gekennzeichnet, dass** der Endanschlag (46) durch eine der Schrägfläche (38) axial gegenüberliegende Begrenzungsfläche (14) der Haltenut (16) gebildet ist.

10. Steckkupplung nach einem oder mehreren der Ansprüche 1 bis 9,
**dadurch gekennzeichnet, dass** der Verschlußschieber (40) mit einem radial nach innen weisenden, ringstegförmigen Führungsansatz (48) in einer nutförmigen, der Haltenut (16) in Löserichtung (34) benachbarten Führungsvertiefung (50) geführt ist.

11. Steckkupplung nach Anspruch 8 und 10,
**dadurch gekennzeichnet, dass** der Endanschlag(46)durcheine mit dem Führungsansatz (48) zusammenwirkende Begrenzungsfläche (52) der Führungsvertiefung (50) gebildet ist.

12. Steckkupplung nach einem oder mehreren der Ansprüche 1 bis 11,
**gekennzeichnet durch** ein in der Montagestellung derart lösbar oder beweglich zwischen dem Gehäuseteil (2) und dem Steckerteil (4) angeordnetes Sicherungselement (54), dass die weitergehende, zum Lösen vorgesehene Einsteckbewegung des Steckerteils (4) blockiert ist und erst nach Lösen oder nach einer bestimmten Bewegung des Sicherungselementes (54) freigegeben wird.

13. Steckkupplung nach Anspruch 12,
**dadurch gekennzeichnet, dass** das Sicherungselement (54) durch ein elastisches Klammer- oder Ringelement (54a) gebildet ist, das lösbar als Distanzstück zwischen Anschlagflächen (56, 58) der Kupplungsteile (2, 4) sitzt.

14. Steckkupplung nach Anspruch 12,
**dadurch gekennzeichnet, dass** das Sicherungselement (54) als ein unverlierbar und derart umschaltbar, irisbesondere verdrehbar zwischen Anschlagflächen (56,58) der Kupplungsteile (2,4) angeordnetess Ringelement (54b) ausgebildet ist, dass es in einer ersten Schaltstellung als Distanzstück zwischen den Anschlagflächen (56,58) sitzt und in einer zweiten Schaltstellung die weitergehende Stecker-Einsteckbewegung freigibt.

15. Steckkupplung nach Anspruch 12,
**dadurch gekennzeichnet, dass** das Sicherungselement (54) als Federklammer (54c) ausgebildet ist, die derart unverlierbar in einer Querschlitzöffnung des Gehäuseteils (2) sitzt, dass sie beim Einstecken des Steckerteils (4) zur Sicherung selbsttätig bereichsweise in eine äußere Ringnut (102) des Steckerteils (4) einrastet, und die mittels von außen zugänglicher Betätigungsabschnitte (54d) derart elastisch verformbar ist, dass sie die Ringnut (102) des Steckerteils (4) für die Entnahme bzw. für die dazu erforderliche weitergehende Einsteckbewegung für die Dauer dieser Betätigung freigibt und nach der Betätigung selbsttätig wieder in ihre sicherungsbereite Stellung zurückkehrt.

16. Steckkupplung nach Anspruch 15,
**dadurch gekennzeichnet, dass** die Federklammer (54c) aus einem im wesentlichen oval gebogenen Federdrahtstück oder aus einem im wesentlichen ringförmigen, geschlitzten Kunststoff For-mring besteht.

17. Steckkupplung nach Anspruch 15 oder 16,
**dadurch gekennzeichnet, dass** die äußere Ringnut (102) des Steckerteils (4) auf ihrer in Einsteckrichtung weisenden Seite von einer . Konusfläche (102a) begrenzt ist.

18. Steckkupplung nach einem oder mehreren der Ansprüche 1 bis 17.
**dadurch gekennzeichnet, dass** das Haltelement (12) derart aus mindestens zwei in Steckrichtung gesehen hintereinanderliegenden Einzelelementen (62) besteht, dass beim Einsteck- bzw. Lösevorgang die Einzelelemente (62) jeweils sukzessive radial verformt werden bzw. sukzessive nacheinander in die Haltenut (16) einrasten.

19. Steckkupplung nach Anspruch 18
**dadurch gekennzeichnet, dass** die Einzelelemente (62) lamellenförmig als radialelastisch verformbare, insbesondere aus Metall bestehende Klammern oder Federringe ausgebildet sind.

20. Steckkupplung nach Anspruch 18 oder 19,
**dadurch gekennzeichnet, dass** zwei bis sechs, insbesondere fünf, gleichartig lamellenförmige Einzelelemente (62) paketartig aneinanderliegen.

21. Steckkupplung nach einem oder mehreren der Ansprüche 1 bis 19,
**dadurch gekennzeichnet, dass** das Halteelement (12) ringförmig aus mehreren einzelnen Ringsegmenten (12a) gebildet ist, wobei die Ringsegmente (12a) von einem konzentrischen Federringelement (12b) mit radial wirkender Federkraft beaufschlagt werden, so dass die - selbst im wesentlichen starren, formstabilen - Ringsegmente (12a) jeweils in radialer Richtung beweglich sind.

22. Steckkupplung nach einem oder mehreren der Ansprüche 1 bis 21,
**dadurch gekennzeichnet, dass** das Gehäuseteil (2) aus zwei lösbar verbundenen Teilen besteht, und zwar einem Basisteil (20) und einem zusammen mit dem Basisteil (20) das Halteelement (12) aufnehmenden Verschlußteil (22), wobei vorzugsweise das Verschlußteil (22) als ein im wesentlichen hohlzylindrisches, bereichsweise in eine Öffnung des Basisteils (20) einsetzbares Einsatzteil (26) ausgebildet und das Einsatzteil (26) mit dem Basisteil (20) über eine Schraubverbindung, eine Rastverbindung, eine Bajonettverbindung oder dergleichen geeignete Verbindungsart lösbar verbunden ist.

23. Steckkupplung nach einem oder mehreren der Ansprüche 2 bis 22,
**dadurch gekennzeichnet dass** die die Haltenut (16) begrenzende, für den Lösevorgang vorgesehene Schrägfläche (38) einen ersten Konuswinkel (α) und die zum radialen Verformen des Halteelements (12) beim Einsteckvorgang vorgesehene, äußere bzw. innere Konusfläche (28) einen zweiten Konuswinkel (β) mit der Steckachse (30) einschließen, wobei diese Konuswinkel (α, β) unterschiedlich groß bemessen sind und insbesondere der erste Konuswinkel (α) größer als der zweite Konuswinkel (β) ist.

24. Steckkupplung nach einem oder mehreren der Ansprüche 1 bis 23,
**dadurch gekennzeichnet, dass** der Verschlußschieber (40) und das auf seiner Umfangsfläche (42) zur Auflage gelängende Halteelement (12) kraftformschlüssig zusammenwirken

## Claims

1. Plug-in coupling for pressure-medium systems, comprising two coupling parts, to be precise a housing part (2) and a plug part (4), it being the case that the plug part (4) can be plugged in a sealed manner into an accommodating opening (8) of the housing part (2) and, in a plugged-in assembled position (Figure 1), can be arrested against release by means of a locking device (10), and that the locking device (10) has a retaining element (12) which is mounted in the housing part (2) and, in the assembled position (Figure 1) engages in a form-fitting or force-fitting manner in a retaining groove (16) of the plug part (4), that a release device (32) is provided such that, starting from the assembled position (Figure 1), by continued plugging-in movement of the plug part (4), the retaining element (12) is moved into a release position (Figure 2), in which it frees the retaining groove (16), and is kept in this release position such that the plug part (4) can subsequently be removed from the accommodating opening (8) (Figure 2), that the release device (32) has a sleeve-like closure slide (40) which is arranged for relative displacement on the plug part (4), having the retaining groove (16), can be actuated by movement of the plug part (4) and is intended for the retaining groove (16), such that the retaining element (12)., in the release position, comes to rest radially on a circumferential surface (42) of the closure slide (40) and is thus kept in the release position and, in the case of the removal movement of the plug, the closure slide (40) is moved axially into a closure position, in the region of the retaining groove (16), such that the retaining groove (16) is completely covered over by the closure slide (40) and is closed for the retaining element (12, 12a, 12b), with the result that it is not possible for the retaining element (12, 12a, 12b) to engage radially in the retaining groove (16), **characterized in that**, on its side which is directed towards the free, plug-in end of the plug part (4), the sleeve-like closure slide (40) projects beyond the circumferential surface (44) of the plug part (4) by a radial distance such that, when the plug part (4) is plugged in, the closure slide (40) is automatically moved axially, by abutment contact on the retaining element (12), into an opening position, in which it frees the retaining groove (16) and thus allows the retaining element to latch in.

2. Plug-in coupling according to Claim 1. **characterized in that** the retaining groove (16) is bounded axially on one side by an oblique surface (38) such that, by the continued plugging-in movement of the plug part (4), the retaining element (12) is moved, via the oblique surface (38), into the release position and onto the circumferential surface (42) of the closure slide (40).

3. Plug-in coupling according to Claim 1 or 2, **characterized in that** the oblique surface (38), which bounds the retaining groove (16), is a constituent part of the coupling part, it being possible for the closure slide (40) to be pushed over the retaining groove (16) such that, for the removal movement of the plug, the retaining groove (16) is covered over by the closure slide (40) and is thus closed in the radial direction against engagement of the retaining element (12).

4. Plug-in coupling according to Claim 2, **characterized in that** the oblique surface (38), which bounds the retaining groove (16), is a constituent part of the closure slide (40), with the result that the retaining groove (16) is formed between the closure slide (40) and an axially opposite boundary surface (14) of the coupling part, displacement of the closure slide (46) resulting in the retaining groove (16) being axially reduced in size and closed or filled by the closure slide (40).

5. Plug-in coupling according to one or more of Claims 1 to 4, **characterized in that** the retaining element (12) is designed such that it can be elastically deformed in the radial direction, and, in the assembled position, latches into the retaining groove (16) by way of its entire axial length or thickness, the axial thickness of the retaining element (12) being approximately equal to the axial length of the retaining groove (16).

6. Plug-in coupling according to one or more of Claims 1 to 5, **characterized in that**, at its free, pulg-in end, the plug part (4) has an outer cone surface (28) for expanding the retaining element (12).

7. Plug-in coupling according to one or more of Claims 1 to 6, **characterized in that** the closure slide (40) is seated for relative displacement on the plug part (4) such that, by a displacement corresponding to the plugging-in direction (34), it is moved into a closure position, in which it covers over the retaining groove (16) and thus closes the latter in the radial direction against latching in of the retaining element (12), which comes to rest on the outer circumferential surface (44) of said closure slide, and, by displacement corresponding to the removal direction (36), it is moved into an opening position, in which it frees or opens the retaining groove (16) in order for the retaining element (12) to latch in.

8. Plug-in coupling according to one or more of Claims 1 to 1, **characterized in that** in its closure position, in which it covers over the retaining groove (16), the closure slide (40) butts axially against an end stop (46) on the plug part.

9. Plug-in coupling according to Claim 8, **characterized in that** the end stop (46) is formed by a boundary surface (14) of the retaining groove (16), said boundary surface being located axially opposite the oblique surface (38).

10. Plug-in coupling according to one or more of Claims 1 to 9, **characterized in that** the closure slide (40) is guided, by way of a radially inwardly oriented guide extension (48) in the form of an annular web, in a groove-like guide depression (50) which is adjacent to the retaining groove (16) in the release direction (34).

11. Plug-in coupling according to Claims 8 and 10, **characterized in that** the end stop (46) is formed by a boundary surface (52) of the guide depression (50), said boundary surface interacting with the guide extension (48).

12. Plug-in coupling according to one or more of Claims 1 to 11, **characterized by** a securing element (54) which, in the assembled position, is arranged in a releasable or moveable manner between the housing part (2) and the plug part (4) such that the continued plugging-in movement of the plug part (4), this movement being provided for release purposes, is blocked and is only freed following release or following a certain movement of the securing element (54).

13. Plug-in coupling according to Claim 12, **characterized in that** the securing element (54) *is* formed by an elastic clip or ring element (54a) which is seated in a releasable manner, as a spacer, between stop surfaces (56, 58) of the coupling pares (2, 4).

14. Plug-in coupling according to Claim 12, **characterized in that** the securing element (54) is designed as a ring element (54b) which is arranged in captive fashion and in a state in which it can be switched over, in particular rotated between stop surfaces (56, 58) of the coupling parts (2, 4), such that, in a first switching position, it is seated, as a spacer, between the stop surfaces (56, 58) and, in a second switching position, it frees the continued plugging-in movement of the plug.

15. Plug-in coupling according to Claim 12, **characterized in that** the securing element (54) is designed as a spring clip (54c) which is seated in captive fashion in a transverse slot opening of the housing part (2) such that, when the plug part (4) is plugged in, it automatically latches, in certain regions, into an outer annular groove (102) of the plug part (4) for securing purposes, and which can be elastically deformed by means of actuating sections (54d), accessible from the outside, such that it frees the annular groove (102) of the plug part (4) for the removal, or for the continued plugging-in movement necessary for this purpose, for the duration of said actuation and, following the actuation, returns automatically again into its ready-to-secure position.

16. Plug-in coupling according to Claim 15, **characterized in that** the spring clip (54c) comprises a spring-wire segment which has been bent into an essentially oval shape, or an essentially annular, split plastic ring.

17. Plug-in coupling according to Claim 15 or 16, **characterized in that** on its side which is oriented in the plugging-in direction, the outer annular groove (102) of the plug part (4) is bounded by a cone surface (102a)

18. Plug-in coupling according to one or more of Claims 1 to 17, **characterized in that** the retaining element (12) comprises at least two individual elements (62), located one behind the other as seen in the plug-in direction, such that, during the plugging-in or release operation, the individual elements (62) are each successively deformed in the radial direction or each latch successively one after the other into the retaining groove (16), respectively.

19. Plug-in coupling according to Claim 18, **characterized in that** the individual elements (62) are designed *in* lamellar form as radially elastically deformable spring rings or clips consisting, in particular, of metal.

20. Plug-in coupling according to Claim 18 or 19, **characterized in that** two to six, in particular five, identically lamellar individual elements (62) butt against one another in the manner of an assembly.

21. Plug-in coupling according to one or more of Claims 1 to 19, **characterized in that** the retaining element (12) is formed in an annular manner from a plurality of individual ring segments (12a), the ring segments (12a) being subjected to radially acting spring force by a concentric spring-ring element (12b), with the result that the ring segments (12a) - which are themselves essentially rigid and dimensionally stable - can each be moved in the radial direction.

22. Plug-in coupling according to one or more of Claims 1 to 21, **characterized in that** the housing part (2) comprises two releasably connected parts, to be precise a basic part (20) and a closure part (22) which, together with the basic part (20), accommodates the retaining element (12), the closure part (22) preferably being designed as an essentially hollow-cylindrical insert part (26) which can be inserted, in certain regions, into an opening of the basic part (20), and the insert part (26) being connected in a releasable manner to the basic part (20) via a screw connection, a latching connection, a bayonet connection or a similar suitable type of connection.

23. Plug-in coupling according to one or more of Claims 2 to 22, **characterized in that** the oblique surface (38), which bounds the retaining groove (16) and is provided for the release operation, encloses a first cone angle (α) with the plug-in axis (30), and the outer or inner cone surface (28), which is provided for the radial deformation of the retaining element (12) during the plugging-in operation, encloses a second cone angle (β) with the plug-in axis (30), these cone angles (α, β) being of different magnitudes and, in particular, the first cone angle (α) being greater than the second cone angle (β).

24. Plug-in coupling according to one or more of Claims 1 to 23, **characterized in that** the closure slide (40) and the retaining element (12), which comes to rest on the circumferential surface (42) of said closure slide, interact in a force/form-fitting manner.

## Revendications

1. Raccord à emboîtement pour systèmes de fluides sous pression, comprenant deux parties d'accouplement, à savoir une partie boîtier (2) et une partie à emboîter (4), la partie à emboîter pouvant être emboîtée de manière étanche dans une ouverture de réception (8) de la partie boîtier (2) et être bloquée pour empêcher la séparation dans une position de montage emboîtée (fig. 1) au moyen d'un dispositif de verrouillage (10), et le dispositif de verrouillage (10) présentant un élément de retenue (12) qui est logé dans la partie boîtier (2) et s'insère, dans la position de montage (fig. 1), de manière solidaire avec correspondance de forme ou par une liaison dynamique, dans une rainure de retenue (16) de la partie à emboîter (4), un dispositif de séparation (32) étant prévu de telle sorte que, à partir de la position de montage (fig. 1), en enfonçant davantage la partie à emboîter (4), l'élément de retenue (12) soit amené dans une position de séparation (fig. 2) libérant la rainure de retenue (16) et soit maintenu dans cette position de séparation de façon que la partie à emboîter (4) puisse être enlevée ensuite de l'ouverture de réception (8) (fig. 2), le dispositif de séparation (32) présentant un coulisseau de fermeture (40) en forme de douille pour la rainure de retenue (16), disposé de manière à coulisser relativement sur la partie à emboîter (4) présentant la rainure de retenue (16), pouvant être actionné par déplacement de la partie à emboîter (4), de telle sorte que l'élément de retenue (12) parvienne dans la position de séparation en appui radial sur une surface périphérique (42) du coulisseau de fermeture (40) et par là même soit maintenu dans la position de séparation, et le coulisseau de fermeture (40) soit déplacé, lors du mouvement d'extraction du corps d'emboîtement, dans le sens axial dans la zone de la rainure de retenue (16) dans une position de fermeture, de façon que la rainure de retenue (16) soit entièrement recouverte par le coulisseau de fermeture (40) et soit fermée pour l'élément de retenue (12, 12a, 12b) de manière à exclure une insertion dans le sens radial de l'élément de retenue (12, 12a, 12b) dans la rainure de retenue (16), **caractérisé en ce que** le coulisseau de fermeture en forme de douille (40) dépasse, de son côté tourné vers l'extrémité libre à enfoncer de la partie à emboîter (4), la surface périphérique (44) de la partie à emboîter (4) avec un dépassement radial (x), de sorte que, lors de l'enfoncement de la partie à emboîter, le coulisseau de fermeture (40) soit amené par contact d'appui contre l'élément de retenue (12), automatiquement dans le sens axial, dans une position d'ouverture libérant la rainure de retenue (16) et permettant ainsi l'enclenchement de l'élément de retenue.

2. Raccord à emboîtement selon la revendication 1, **caractérisé en ce que** la rainure de retenue (16) est limitée d'un côté dans le sens axial par une surface inclinée (38), de sorte que, en enfonçant davantage la partie à emboîter (4), l'élément de retenue (12) soit amené par l'intermédiaire de la surface inclinée (38) dans la position de séparation et sur la surface périphérique (42) du coulisseau de fermeture (40).

3. Raccord à emboîtement selon la revendication 1 ou 2, **caractérisé en ce que** la surface inclinée (38) limitant la rainure de retenue (16) fait partie de la partie d'accouplement, le coulisseau de fermeture (40) pouvant coulisser sur la rainure de retenue (16) de façon que, pour le mouvement d'enlèvement de la partie emboîtée, la rainure de retenue (16) est recouverte par le coulisseau de fermeture (40) et fermée dans le sens radial, empêchant ainsi l'insertion de l'élément de retenue (12).

4. Raccord à emboîtement selon la revendication 2, **caractérisé en ce que** la surface inclinée (38) limitant la rainure de retenue (16) fait partie du coulisseau de fermeture (40), de façon que la rainure de retenue (16) soit formée entre le coulisseau de fermeture (40) et une surface de délimitation (14) opposée dans le sens axial de la partie d'accouplement, la rainure de retenue (16) étant réduite dans le sens axial par le déplacement du coulisseau de fermeture (40) et fermée, ou remplie, par le coulisseau de fermeture (40).

5. Raccord à emboîtement selon l'une ou plusieurs des revendications 1 à 4, **caractérisé en ce que** l'élément de retenue (12) est conçu de manière à pouvoir se déformer de manière élastique dans la direction radiale et s'insère dans la rainure de retenue (16), dans la position de montage, avec toute sa longueur mesurée dans le sens axial, respectivement son épaisseur, l'épaisseur axiale de l'élément de retenue (12) étant à peu près égale à la longueur axiale de la rainure de retenue (16).

6. Raccord à emboîtement selon l'une ou plusieurs des revendications 1 à 5, **caractérisé en ce que** la partie à emboîter (4) présente, à son extrémité libre à emboîter, une surface conique extérieure (28) pour écarter l'élément de retenue (12).

7. Raccord à emboîtement selon l'une ou plusieurs des revendications 1 à 6, **caractérisé en ce que** le coulisseau de fermeture (40) est situé sur la partie à emboîter (4) de manière à pouvoir coulisser relativement, de façon qu'il soit amené, par un déplacement dans la direction d'emboîtement (34), dans une position de fermeture, dans laquelle il recouvre la rainure de retenue (16) et la ferme ainsi dans la direction radiale en empêchant l'insertion de l'élément de retenue (12) venant en contact sur sa surface périphérique extérieure (44) et soit amené, par un déplacement dans la direction de l'enlèvement (36), dans une position d'ouverture, dans laquelle il libère, ou ouvre, la rainure de retenue (16) pour l'insertion de l'élément de retenue (12).

8. Raccord à emboîtement selon l'une ou plusieurs des revendications 1 à 7, **caractérisé : en ce que** le coulisseau de fermeture (40) repose, dans sa position de fermeture où il recouvre la rainure de retenue (16), dans le sens axial contre une butée d'extrémité (46) côté partie à emboîter.

9. Raccord à emboîtement selon la revendication 8, **caractérisé en ce que** la butée d'extrémité (46) est formée par une surface de délimitation (14) de la rainure de retenue (16), opposée à la surface inclinée (38) dans le sens axial.

10. Raccord à emboîtement selon l'une ou plusieurs des revendications 1 à 9, **caractérisé en ce que** le coulisseau de fermeture (40) est guidé avec un embout de guidage (48) en forme de nervure annulaire, regardant dans le sens radial vers l'intérieur, dans un creux de guidage (50) en forme de rainure, voisin de la rainure de retenue (16) dans le sens de la séparation (34).

11. Raccord à emboîtement selon les revendications 8 et 10, **caractérisé en ce que** la butée d'extrémité (46) est formée par une surface de délimitation (52) du creux de guidage (50) coopérant avec l'embout de guidage (48).

12. Raccord à emboîtement selon l'une ou plusieurs des revendications 1 à 11, **caractérisé par** un élément de sécurité (54) disposé, dans la position de montage, de manière séparable ou mobile entre la partie boîtier (2) et la partie à emboîter (4), de façon que la poursuite du mouvement d'enfoncement de la partie à emboîter (4) prévue pour la séparation soit bloquée et ne soit libérée qu'après séparation ou après un mouvement déterminé de l'élément de sécurité (54).

13. Raccord à emboîtement selon la revendication 12, **caractérisé en ce que** l'élément de sécurité (54) est formé par un élément élastique à pince ou annulaire (54a) qui est situé de manière séparable comme une pièce d'écartement entre des surfaces de butée (56, 58) des parties d'accouplement (2, 4).

14. Raccord à emboîtement selon la revendication 12, **caractérisé en ce que** l'élément de sécurité (54) est conçu comme un élément annulaire (54b) disposé de manière imperdable et commutable, en particulier de manière à pouvoir tourner entre des surfaces de butée (56, 58) des parties d'accouplement (2, 4), de façon qu'il soit situé, dans une première position de commande, comme pièce d'écartement entre les surfaces de butée (56, 58), et qu'il libère, dans une deuxième position de commande, la poursuite du mouvement d'enfoncement de la partie à emboîter.

15. Raccord à emboîtement selon la revendication 12, **caractérisé en ce que** l'élément de sécurité (54) est conçu comme une pince à ressort (54c) qui est logée de manière imperdable dans une ouverture de fente transversale de la partie boîtier (2), de façon qu'elle s'engage, lorsqu'on enfonce la partie à emboîter (4), pour la sécurité, automatiquement par endroits dans une rainure annulaire extérieure (102) de la partie à emboîter (4), et qui peut se déformer de manière élastique au moyen de segments de manoeuvre (54d) accessibles de l'extérieur, de façon qu'elle libère la rainure annulaire (102) de la partie à emboîter (4), pour l'enlèvement ou pour la poursuite nécessaire du mouvement d'enfoncement, pour la durée de cette manoeuvre, et revient automatiquement dans sa position de sécurité après la manoeuvre.

16. Raccord à emboîtement selon la revendication 15, **caractérisé en ce que** la pince à ressort (54c) est réalisée dans un morceau de fil d'acier pour ressort cintré essentiellement en ovale ou dans un anneau moulé en matière plastique fendu, essentiellement de forme annulaire.

17. Raccord à emboîtement selon la revendication 15 ou 16, **caractérisé en ce que** la rainure annulaire extérieure (102) de la partie à emboîter (4) est limitée, de son côté regardant dans la direction d'emboîtement, par une surface conique (102a).

18. Raccord à emboîtement selon la revendication là 17, **caractérisé en ce que** l'élément de retenue (12) est constitué d'au moins deux éléments isolés (62) situés l'un derrière l'autre quand on regarde dans la direction d'emboîtement, de façon que, lors de l'emboîtement ou de la séparation, les éléments isolés (62) soient déformés dans le sens radial chacun successivement et s'insèrent successivement l'un après l'autre dans la rainure de retenue (16).

19. Raccord à emboîtement selon la revendication 18, **caractérisé en ce que** les éléments (62) isolés sont prévus en forme de lamelles, comme des pinces ou des rondelles-ressorts pouvant se déformer de manière élastique dans le sens radial, en particulier en métal.

20. Raccord à emboîtement selon la revendication 18 ou 19, **caractérisé en ce que** deux à six, en particulier cinq éléments isolés (62) en forme de lamelles identiques reposent les uns contre les autres en formant un ensemble.

21. Raccord à emboîtement selon l'une ou plusieurs des revendications 1 à 19, **caractérisé en ce que** l'élément de retenue (12) est formé, en forme d'anneau, de plusieurs segments d'anneau (12a), les segments d'anneau (12a) étant soumis, par un élément de rondelle-ressort concentrique (12b), à une force élastique s'exerçant dans le sens radial, de sorte que les segments d'anneau (12a), même essentiellement rigides, indéformables, sont mobiles dans la direction radiale.

22. Raccord à emboîtement selon l'une ou plusieurs des revendications 1 à 21, **caractérisé en ce que** la partie boîtier (2) est constituée de deux parties reliées de manière séparable, à savoir une partie de base (20) et une partie d'obturation (22) logeant, avec la partie de base, l'élément de retenue (12), la partie d'obturation (22) étant de préférence formée comme une pièce d'insertion (26) de forme essentiellement cylindrique creuse, pouvant être insérée par endroits dans une ouverture de la partie de base (20), et la pièce d'insertion (26). est reliée de manière séparable avec la partie de base (20) par l'intermédiaire d'un assemblage à vis, un assemblage par encliquetage, un assemblage à baïonnette ou un mode d'assemblage approprié similaire.

23. Raccord à emboîtement selon l'une ou plusieurs des revendications 2 à 22, **caractérisé en ce que** la surface inclinée (38) limitant la rainure de retenue (16), prévue pour le processus de séparation, forme un premier angle de cône (α) et la surface conique intérieure et extérieure (28), prévue pour la déformation radiale de l'élément de retenue (12) lors de l'emboîtement, forme un deuxième angle de cône (β) avec l'axe d'emboîtement (30), ces angles de cônes (α, β) étant dimensionnés différemment et en particulier le premier angle de cône (α) étant plus grand que le deuxième angle de cône (β).

24. Raccord à emboîtement selon l'une ou plusieurs des revendications 1 à 23, **caractérisé en ce que** le coulisseau de fermeture (40) et l'élément de retenue (12) venant en appui sur sa surface périphérique (42) coopèrent de manière solidaire avec correspondance et forme et par une liaison dynamique.
